# EUROPÄISCHE PATENTSCHRIFT

(11) **EP 3 719 455 B1**
(45) Veröffentlichungstag und Bekanntmachung des Hinweises auf die Patenterteilung: **07.06.2023**
(21) Anmeldenummer: 20164477.0
(22) Anmeldetag: 20.03.2020
(51) Int. Cl.: G01F 13/00, G01F 15/00, G01F 15/14, G01F 1/06, G01F 1/10, G01F 15/075

(54) **DOSIERVORRICHTUNG ZUR ABGABE EINER VORBESTIMMTEN FLÜSSIGKEITSMENGE, INSBESONDERE EINER VORBESTIMMTEN WASSERMENGE**
DOSING DEVICE FOR DISPENSING A PREDETERMINED QUANTITY OF LIQUID, IN PARTICULAR A PREDETERMINED QUANTITY OF WATER
DISPOSITIF DE DOSAGE PERMETTANT DE DISTRIBUER UNE QUANTITÉ DE LIQUIDE PRÉDÉTERMINÉE, EN PARTICULIER UNE QUANTITÉ D'EAU PRÉDÉTERMINÉE

(30) Priorität: 05.04.2019 DE 102019109009
(43) Veröffentlichungstag der Anmeldung: 07.10.2020
(73) Patentinhaber: Collomix GmbH, 85080 Gaimersheim (DE)
(72) Erfinder: Essing, Alexander, 85049 Ingolstadt (DE); Baumann, Martin, 85080 Gaimersheim (DE)
(74) Vertreter: Liebl, Thomas

(56) Entgegenhaltungen:
- EP-A1- 1 637 497
- WO-A2-2012/126963
- DE-A1-102015 220 336
- GB-A- 2 371 539
- US-A- 5 007 453
- US-A- 6 119 720
- US-B1- 6 357 300

## Beschreibung

Die Erfindung betrifft eine Dosiervorrichtung zur Abgabe einer vorbestimmten Flüssigkeitsmenge, insbesondere einer vorbestimmten Wassermenge. Weiter betrifft die Erfindung eine Verwendung einer derartigen Dosiervorrichtung zur Abgabe einer vorbestimmten Flüssigkeitsmenge sowie eine Anordnung einer derartigen Dosiervorrichtung an einem Behälter mit einer Behälteröffnung. Insbesondere im Industriebereich, beispielsweise im Baugewerbe, ist es oftmals notwendig, Behälter oder Gefäße mit einer genau vorgegebenen Menge einer Flüssigkeit zu befüllen, zum Beispiel mit Wasser, wobei die Begrifflichkeit Flüssigkeit im vorliegenden Kontext ausdrücklich weit zu verstehen ist und jedwedes fließfähige Medium betrifft, das Strömungseigenschaften aufweist.

Die Befüllung von Behältern oder Gefäßen mit einer exakten Flüssigkeitsmenge erfordert in der Regel eine genaue Überwachung des Befüllvorgangs durch das Bedienpersonal, was zeit- und arbeitsintensiv ist.

Das Dokument US 6 119 720 A betrifft eine Hochwasserschutz-Sicherheitsabschaltvorrichtung für die Wasserversorgung. Das Dokument EP 1 637 497 A1 betrifft Dosierpistolen zum Ausgeben eines voreingestellten Volumens an flüssigem Schmiermittel.

Der Erfindung liegt daher die Aufgabe zugrunde, eine Dosiervorrichtung zu schaffen, mit der eine vorbestimmte Flüssigkeitsmenge, insbesondere eine vorbestimmte Wassermenge, auf funktionssichere Weise zeit- und arbeitssparend abgegeben werden kann.

Diese Aufgabe wird gelöst mit den Merkmalen der unabhängigen Ansprüche. Vorteilhafte Ausführungsformen sind Gegenstand der Unteransprüche.

Gemäß Anspruch 1 ist eine Dosiervorrichtung zur Abgabe einer vorbestimmten Flüssigkeitsmenge, insbesondere einer vorbestimmten Wassermenge, vorgesehen, die ein Gehäuse aufweist, das einen Flüssigkeits-Zulauf und einen Flüssigkeits-Auslauf aufweist, die mittels eines Strömungskanals strömungsverbunden sind und damit Bestandteil des Strömungskanals ausbilden. Weiter ist ein im Strömungsweg des Strömungskanals angeordnetes Ventilelement vorgesehen, das zur Absperrung oder Freigabe des Strömungsweges zum Flüssigkeits-Auslauf zwischen einer Schließstellung und wenigstens einer Offenstellung verstellbar ist. Weiter umfasst die Dosiervorrichtung eine Messeinrichtung, mittels der die den Strömungskanal in Richtung Flüssigkeits-Auslauf durchströmende Durchflussmenge messbar ist. Zudem ist eine Steuereinrichtung vorgesehen, die eine Bedieneinheit aufweist oder mit einer Bedieneinheit signalübertragend gekoppelt ist, wobei mittels der Bedieneinheit die Dosiervorrichtung mittelbar oder unmittelbar aktivierbar bzw. betätigbar ist. Die Bedieneinheit, die auch als Bedienelement bezeichnet werden kann, kann somit unmittelbar am Gehäuse der Dosiervorrichtung angeordnet sein oder aber gegebenenfalls als separat handhabbares Bauteil ausgebildet sein, das mit der Dosiervorrichtung drahtgebunden oder drahtlos über eine Kommunikationsschnittstelle signalübertragend verbindbar bzw. koppelbar ist. Erfindungsgemäß ist vorgesehen, dass die Steuereinrichtung weiter mit dem Ventilelement und mit der Messeinrichtung steuerungstechnisch gekoppelt ist dergestalt, dass die Steuereinrichtung das Ventilelement bei einer Betätigung der Dosiervorrichtung in einer Offenstellung hält oder in eine Offenstellung überführt.

Mit einem derartigen Aufbau einer Dosiervorrichtung kann eine vorbestimmte Flüssigkeitsmenge auf einfache und funktionssichere Weise abgegeben bzw. dosiert werden. Ein derartiger Aufbau der Dosiervorrichtung ermöglicht beispielsweise eine nachstehend noch näher erläuterte Sollwertvorgabe, um eine genau abgestimmte Flüssigkeitsmenge in ein Gefäß oder Behälter zu dosieren zu können.

Für eine besonders ergonomische Handhabung der Dosiervorrichtung, insbesondere als Handgerät, das mit zum Beispiel einer Hand gehalten und in der Art einer Fernbedienung für beispielsweise ein TV-Gerät betätigbar bzw. bedienbar ist, ist das Gehäuse vorzugsweise stabartig und/oder I-förmig ausgebildet. Besonders bevorzugt ist hierbei ein Aufbau, bei dem das Gehäuse stabartig und/oder I-förmig ausgebildet ist und sich zu einem der beiden in Längsrichtung gegenüberliegenden Gehäuseenden hin, quer zur Längsrichtung und/oder in Hochachsenrichtung gesehen, vorzugsweise pleuelartig, verbreitert, so dass das Gehäuse einen schmalen Griffbereich und einen sich an den schmalen Griffbereich anschließenden und gegenüber diesem, quer zur Längsrichtung und/oder in Hochachsenrichtung gesehen, verbreiterten Kopfbereich aufweist. Ein derartiger besonders bevorzugter Gehäuseaufbau weist den Vorteil auf, dass Technikkomponenten, wie beispielsweise Bestandteile der Messeinrichtung und/oder des Ventilelements bzw. auch die Komponenten der Steuereinrichtung, die technisch bedingt eine bestimmte Mindestgröße aufweisen, dann einfach und funktionssicher im verbreiterten Kopfbereich angeordnet werden können und mit dem schmalen Griffbereich nach wie vor ein ergonomisch und einfach, zum Beispiel mit einer Hand, bedien- und handhabbares Bauteil als Dosiervorrichtung zur Verfügung gestellt wird.

Weiter erlaubt ein derartiger Aufbau eine besonders vorteilhafte Unterteilung des Gehäuses in einen flüssigkeitsführenden Druckbereich, der im Wesentlichen den Strömungskanal aufnimmt, einerseits sowie einen im Wesentlichen die Technik- bzw. Elektronikkomponenten aufnehmenden Technik- bzw. Elektronikbereich andererseits. Dies wird nachstehend in Verbindung mit weiteren bevorzugten Ausgestaltungen näher erläutert:
Gemäß einer bevorzugten konkreten Ausgestaltung hierzu, die auch designtechnisch besonders ansprechend ist, ist das Gehäuse, bezogen auf die Draufsicht auf das Gehäuse, hinsichtlich seiner in Querrichtung gegenüberliegenden und in Längsrichtung verlaufenden Seitenkanten im Wesentlichen achsensymmetrisch mit einer in Längsrichtung verlaufenden Symmetrieachse ausgebildet. Dies erfolgt bevorzugt dergestalt, dass der schmale Griffbereich des Gehäuses von zwei in Längsrichtung verlaufenden und einander in Querrichtung beabstandet gegenüberliegenden ersten Seitenkantenbereichen begrenzt ist, an die sich in Längsrichtung gesehen jeweils ein nach außen in Richtung von der Symmetrieachse weg erstreckender und die Gehäuseaußenkontur in Querrichtung verbreitender Übergangsbereich anschließt. Weiter schließt sich an die jeweiligen Übergangsbereiche wiederum jeweils in Längsrichtung verlaufender zweiter Seitenkantenbereich an, wobei die zweiten Seitenkantenbereiche den gegenüber dem schmalen Griffbereich in Querrichtung verbreiternden Kopfbereich ausbilden und dementsprechend einen größeren Abstand zur Symmetrieachse aufweisen als die ersten Seitenkantenbereiche.

Eine besonders hochwertige ergonomische und designtechnische Ausgestaltung ergibt sich zudem dann, wenn die ersten Seitenkantenbereiche in Längsrichtung gesehen im Wesentlichen parallel zueinander und/oder geradlinig verlaufen und an einem, dem verbreiternden Kopfbereich gegenüberliegenden Gehäuseende mit einer in Querrichtung verlaufenden geradlinigen oder gekrümmten Griffbereich-Querkante verbunden sind. Alternativ oder zusätzlich können die Übergangsbereiche nach außen von der Symmetrieachse weg, insbesondere S-förmig, gekrümmt sein, um einen sanften, abgerundeten Übergang zwischen den ersten und zweiten Seitenkantenbereichen zu schaffen. Weiter können alternativ oder zusätzlich die zweiten Seitenkantenbereiche in Richtung zur Symmetrieachse hin gekrümmt sein und endseitig mit einer in Querrichtung verlaufenden geradlinigen oder gekrümmten Kopfbereich-Querkante verbunden sein. Damit ergibt sich eine besonders einfach herzustellende, designtechnisch hochwertige Ausgestaltung des verbreiteten Kopfbereiches.

Grundsätzlich gibt es viele Möglichkeiten, ein derartiges Gehäuse herzustellen. Erfindungsgemäß, eine besonders einfache und preiswerte Herstellung eines Gehäuses ergibt sich dann, wenn das einen Hohlraum als Aufnahmeraum umschließende Gehäuse zweischalig mit einer bezogen auf die Hochachsenrichtung im Wesentlichen horizontalen Gehäuse-Trennebene ausgebildet ist, sodass das zweiteilige Gehäuse eine, bezogen auf die Hochachsenrichtung, obere, vorzugsweise wannenförmige und/oder auf ihrer Sicht- bzw. Außenseite die Bedieneinheit aufweisende, Gehäuseschale und eine untere, vorzugsweise wannenförmige, Gehäuseschale aufweist, die im montierten Zustand miteinander verbunden sind, und zwar vorzugsweise lösbar miteinander verbunden sind. Die Begrifflichkeit obere und untere bezieht sich dabei im vorliegenden Kontext stets auf eine Hochachsenrichtung, bei der die obere Gehäuseschale in Hochachsenrichtung oberhalb der unteren Gehäuseschale liegt. Die obere Gehäuseschale ist dabei zum Beispiel auch dadurch charakterisiert, dass diese auf ihrer Sicht- bzw. Außenseite die Bedieneinheit aufweist, deren Bedienfeld beispielsweise Tasten und/oder ein Display und/oder ein Sichtfenster für ein Display aufweist. Dies ist allerdings in keinster Weise begrenzend oder limitierend zu verstehen und dient hier ausdrücklich nur der besseren Verständlichkeit. Selbstverständlich können daher die Begrifflichkeiten "obere" und "untere" auch gegeneinander getauscht werden.

Gemäß einer weiteren besonders bevorzugten Ausgestaltung ist der Flüssigkeits-Zulauf stirnseitig an einem der beiden in Längsrichtung gegenüberliegenden Gehäuseenden angeordnet, sodass sich der Strömungskanal vom Flüssigkeits-Zulauf ausgehend in Längsrichtung des Gehäuses bis in etwa in den Bereich des in Längsrichtung gegenüberliegenden Gehäuseendes erstrecken kann und dort, vorzugsweise in einer bezogen auf die Hochachsenrichtung unteren Bodenwand des Gehäuses, mündet, wobei die Mündungsöffnung den Flüssigkeits-Auslauf ausbildet oder Bestandteil des Flüssigkeits-Auslaufes ist. Mit einer derartigen stirnseitigen Anordnung des Flüssigkeits-Zulaufs lässt sich die gewünschte, langgestreckte und stabförmige Gehäuseausgestaltung der Dosiervorrichtung nach wie vor unverändert beibehalten, insbesondere im Hinblick auf eine kompakte Einhandbedienung, da der Flüssigkeits-Zulauf dann einfach im Wesentlichen in geradliniger Verlängerung einer dort angeschlossenen Zuführleitung für die Flüssigkeit liegt.

Alternativ oder zusätzlich dazu kann insbesondere in Verbindung mit einem Gehäuse, das den zuvor beschriebenen schmalen Griffbereich und verbreiteten Kopfbereich aufweist, vorgesehen sein, dass der Flüssigkeitszulauf an dem schmalen Griffbereich angeordnet ist, insbesondere dort stirnseitig an dem, dem verbreiterten Kopfbereich gegenüberliegenden Gehäuseende angeordnet ist, sodass sich der Strömungskanal dann bevorzugt vom Flüssigkeits-Zulauf ausgehend in Längsrichtung des Gehäuses bis zum verbreiterten Kopfbereich erstreckt und dort, vorzugsweise in einer bezogen auf die Hochachsenrichtung unteren Bodenwand des Gehäuses, mündet, wobei die Mündungsöffnung den Flüssigkeits-Auslauf ausbildet oder Bestandteil des Flüssigkeits-Auslaufes ist.

Die bei den beiden eben beschriebenen Ausführungsformen als bevorzugte Variante vorgesehene bodenwandseitige Mündung des Flüssigkeits-Auslaufes hat den Vorteil, dass die Dosiervorrichtung dann in der Art eines Brausekopfs gehandhabt werden kann, was für viele Anwendungsfälle, zum Beispiel beim Befüllen von Behältern oder Gefäßen, günstiger ist als eine "gartenschlauchartige" Anordnung des Flüssigkeits-Auslaufs an einer Gehäusestirnseite, wenngleich diese selbstverständlich auch für diejenigen Anwendungsfälle, wo dies erforderlich sein sollte bzw. gewünscht sein sollte, natürlich selbstverständlich vorgesehen werden kann.

Erfindungsgemäß ist vorgesehen, dass der Strömungskanal, vorzugsweise bodenwandseitig, in einer der Gehäuseschalen verläuft und wenigstens bereichsweise mehrteilig ausgebildet ist mit einem nach oben zur Gehäuseschale hin offenen ersten Wandabschnitt, der zur Ausbildung eines geschlossenen Strömungsweges mit einem abnehmbaren, deckelartigen zweiten Wandabschnitt verschließbar, insbesondere dicht verschließbar ist. Der deckelartige zweite Wandabschnitt ist als Technikdeckel ausgebildet, an dem wenigstens ein Teil der Messeinrichtung und wenigstens ein Teil des Ventilelementes dergestalt lagerbar und/oder anordenbar ist, dass wenigstens ein Teil der Messeinrichtung und des Ventilelementes im Strömungsweg angeordnet ist. Mit einem derartigen Aufbau ergibt sich eine besonders funktionsintegrierte Lösung, die zudem sehr kompakt baut, da die in Verbindung mit der Dosiervorrichtung vorzusehenden technischen Komponenten auf engstem Raum angeordnet werden können.

Besonders bevorzugt ist ein derartiger Aufbau mit einem Technikdeckel in Verbindung mit einer Gehäuseausgestaltung, die, wie vorstehend beschrieben einen schmalen Griffbereich und einen sich an den schmalen Griffbereich anschließenden und gegenüber diesem verbreiterten Kopfbereich aufweist, da dieser verbreiterte Kopfbereich einen ausreichenden Raum für die Anordnung eines derartigen Technikdeckels ausbildet. Dementsprechend ist gemäß dieser besonders bevorzugten Ausführungsform vorgesehen, dass der Strömungskanal, vorzugsweise bodenwandseitig, in der unteren Gehäuseschale verläuft und angeordnet ist und im schmalen Griffbereich einen ersten Strömungskanalabschnitt aufweist, an dem sich ein in den verbreiterten Kopfbereich hinein erstreckender zweiter Strömungskanalabschnitt anschließt, der zumindest im verbreiterten Kopfbereich, vorzugsweise in etwa ab dem Übergangsbereich zum verbreiterten Kopfbereich, mehrteilig ausgebildet ist und einen nach oben zur oberen Gehäuseschale hin offenen ersten bzw. unteren Wandabschnitt aufweist, der zur Ausbildung eines geschlossenen Strömungsweges mit einem abnehmbaren, deckelartigen, zweiten bzw. oberen Wandabschnitt des zweiten Strömungskanalabschnittes verschließbar ist, insbesondere dicht verschließbar ist. Der deckelartige obere Wandabschnitt ist als Technikdeckel ausgebildet, an dem wenigstens ein Teil der Messeinrichtung und/oder wenigstens ein Teil des Ventilelements dergestalt lagerbar und/oder anordenbar ist, das wenigstens ein Teil der Messeinrichtung und/oder des Ventilelementes im Strömungsweg des zweiten Strömungskanalabschnittes angeordnet ist.

Zur Abdichtung ist vorzugsweise zwischen den einander zugeordneten bzw. aneinander angrenzenden Randabschnitten des Technikdeckels und des ersten unteren Wandabschnittes ein Dichtelement vorgesehen, vorzugsweise ein ringförmiges bzw. ringförmig umlaufendes Dichtelement. Ferner ist innerhalb des ringförmigen Dichtelementes bevorzugt ein Quersteg vorgesehen, der dazu dient, den Technikdeckel insbesondere im nachstehend noch näher beschriebenen U-förmigen Strömungs-Umlenkungsbereich zuverlässig abzudichten.

Die Messeinrichtung ist bevorzugt in Flüssigkeits-Strömungsrichtung gesehen vor und damit stromauf des Ventilelementes angeordnet, könnte gegebenenfalls aber auch stromab des Ventilelementes angeordnet sein.

Für eine besonders einfache Herstellung und funktionsintegrierte Lösung ist zudem vorgesehen, dass der Flüssigkeits-Zulauf bevorzugt an derjenigen Gehäuseschale angeordnet ist, in der der Strömungskanal verläuft. Das heißt also in Verbindung mit der oben beschriebenen konkreten Lösung, bei der der Strömungskanal in der unteren Gehäuseschale verläuft, ist der Flüssigkeits-Zulauf ebenfalls an der unteren Gehäuseschale angeordnet.

Die Messeinrichtung ist bevorzugt als Flügelrad-Durchflussmesser ausgebildet, der sich bei hoher Funktionssicherheit durch eine kompakte Bauweise auszeichnet und somit gut in ein kompakt und kleinbauendes Gehäuse integriert werden kann. Dieser Flügelrad-Durchflussmesser weist ein im Strömungskanal angeordnetes, drehbar gelagertes Flügelrad sowie einen mit dem Flügelrad zusammenwirkenden Messaufnehmer auf, der die Drehbewegung des Flügelrades erfasst und als Signal an eine Steuer- und Auswerteelektronik der Steuereinrichtung übermittelt. Besonders bevorzugt ist dabei eine Ausgestaltung, bei der das Flügelrad drehbar am Technikdeckel gelagert und in dem Strömungskanal, beispielsweise in dem zweiten Strömungskanalabschnitt, angeordnet ist. Der Messaufnehmer ist bevorzugt durch einen im Gehäuse angeordneten, zum Beispiel magnetfeld-gesteuerten, Impulsgeber gebildet, der die Drehbewegung des Flügelrades in ein durchflussproportionales Signal umwandelt und der Steuer- und Auswerteelektronik der Steuereinrichtung zuführt.

Gemäß einer weiteren besonders bevorzugten Ausgestaltung ist vorgesehen, dass der im schmalen Griffbereich verlaufende erste Strömungskanalabschnitt an seiner in Hochachsenrichtung gesehen Oberseite im Wesentlichen eben ausgebildet ist und/oder ein Auflager für eine Batterieaufnahme ausbildet, in der wenigstens eine Batterie aufgenommen ist, die zur Energieversorgung mittelbar oder unmittelbar mit der Steuereinrichtung und/oder mit der Bedieneinheit und/oder mit dem Ventilelement und/oder mit der Messeinrichtung gekoppelt ist. Der im schmalen Griffbereich verlaufende erste Strömungskanalabschnitt bildet hier somit in einer Doppelfunktion gleichzeitig eine Auflage für eine Batterieaufnahme aus, was ebenfalls dazu beiträgt, dass der schmale Griffbereich insgesamt sehr kompakt ausgebildet werden kann.

In Verbindung mit der Batterieaufnahme ist weiter ein Aufbau bevorzugt, bei dem sich die Batterieaufnahme bis in den Bereich des Flügelrades erstreckt, vorzugsweise oberhalb des Flügelrades am Technikdeckel aufliegt und/oder am Technikdeckel gelagert ist. Bei einer derartigen Ausführungsform kann der Messaufnehmer sehr gut an der Batterieaufnahme angeordnet und dem Flügelrad zugeordnet werden, was ebenfalls dazu beiträgt, einen insgesamt wenig bauteilintensiven und kompakten Aufbau des Gehäuses zu bewerkstelligen.

Weiter ist es vorteilhaft, wenn in dem Gehäuse, vorzugsweise in der oberen Gehäuseschale, eine Steuerungs-Platine der Steuereinrichtung angeordnet ist, wobei die Steuerungs-Platine eine mit der Bedieneinheit und/oder mit der Messeinrichtung und/oder mit dem Ventilelement signalübertragend gekoppelte Steuer- und Auswerteelektronik und/oder ein Display, das im montierten Zustand einer Gehäuseausnehmung in der Sicht- bzw. Außenseite als Oberseite des Gehäuses zugeordnet ist, aufweist. Eine derartige Steuerungs-Platine ist relativ kleinbauend und kann daher sehr gut zur insgesamt kompakten Bauweise der Dosiervorrichtung beitragen.

Die Steuerungs-Platine ist bevorzugt mittels einer Steckverbindung lösbar an der Innenseite der oberen Gehäuseschale gehaltert. Hierzu ist bevorzugt vorgesehen, dass die Steuerungs-Platine wenigstens eine, vorzugsweise mehrere Stecköffnungen aufweist, mittels der die Steuerungs-Platine auf entsprechend zugeordnete Steckzapfen in der oberen Gehäuseschale aufgesteckt wird. Zur Sicherung der Steckverbindung kann eine Sicherungsscheibe vorgesehen werden, die auf die Steckzapfen aufgesteckt wird und die Steuerungs-Platine positionsgenau festlegt und hält.

Gemäß einer weiteren besonders bevorzugten konkreten Ausgestaltung kann der verbreiterte Kopfbereich den schmalen Griffbereich in Hochachsenrichtung an der Unterseite überragen und damit der bodenwandseitig im Gehäuse verlaufende zweite Strömungskanalabschnitt gegenüber dem ebenfalls bodenwandseitig im Gehäuse verlaufenden ersten Strömungskanalabschnitt in Hochachsenrichtung nach unten versetzt sein. Dadurch ist im Bereich oberhalb des Technikdeckels ein Freiraum ausgebildet, der zur Anordnung weiterer technischer Bauteile zur Verfügung steht, sodass das Gehäuse an seiner, bezogen auf die Hochachsenrichtung, Sicht- und Außen- bzw. Oberseite im Wesentlichen glatt und/oder eben ausgebildet ist, was dazu beiträgt, einen insgesamt sehr hochwertigen Eindruck ohne sichtseitenseitige Vorsprünge, Kanten oder Ecken auszubilden. Besonders bevorzugt ist es im Rahmen der erfindungsgemäßen Lösung, wenn die Steuerungs-Platine in diesem Freiraum angeordnet und aufgenommen ist.

Der Technikdeckel selbst kann zum Beispiel integral mit einer der beiden Gehäuseschalen verbunden sein und dann beim Zusammenbau der beiden Gehäuseschalen gleichzeitig ebenfalls dicht mit dem zugeordneten offenen Wandabschnitt des Strömungskanals verbunden werden. Eine derartige Lösung ist jedoch herstellungstechnisch relativ aufwändig, so dass der Technikdeckel gemäß einer besonders bevorzugten Ausgestaltung durch ein separates Bauteil gebildet ist, der bevorzugt lösbar mit dem zugeordneten Wandabschnitt verbindbar ist. Gemäß einer hierzu besonders bevorzugten Ausgestaltung ist der Technikdeckel lösbar, vorzugsweise mittels mehrerer Schraubverbindungen, in bzw. im Inneren der unteren Gehäuseschale festgelegt. Dabei kann bevorzugt vorgesehen sein, dass die Schraubverbindungen am Außenumfang des Technikdeckels mehrere voneinander beabstandete Abstütz- und Durchschraubdome aufweisen, denen in der unteren Gehäuseschale angeordnete Einschraubdome dergestalt zugeordnet sind, dass die Einschraubdome und die Abstütz- und Durchschraubdome im montierten Zustand des Technikdeckels in Schraubrichtung gesehen im Wesentlichen fluchtend übereinander liegen und eine Verbindungsschraube der Schraubverbindung unter Abstützung am Abstütz- und Durchschraubdom durch diesen hindurch in den Einschraubdom eingeschraubt ist und somit der Abstütz- und Durchschraubdom mit dem Einschraubdom verspannt ist. Dadurch kann der Technikdeckel zudem auf besonders einfache Weise dicht mit dem zugeordneten, vorzugsweise unteren Wandabschnitt verbunden werden.

Besonders bevorzugt ist weiter eine konkrete Ausgestaltung, bei der der durch den Technikdeckel und den unteren Wandabschnitt ausgebildete Bereich des zweiten Strömungskanalabschnittes einen im Wesentlichen U-förmigen Strömungsumlenkungsbereich aufweist, der so ausgebildet ist, dass die vom unteren Wandabschnitt her in den Umlenkungsbereich einströmende Flüssigkeit zunächst in einem ersten Abschnitt des Strömungsumlenkungsbereichs in Hochachsenrichtung gesehen nach oben bzw. in Richtung Technikdeckel zu einem im Technikdeckel ausgebildeten Überströmbereich strömt, in dem die Strömungsumlenkung stattfindet, bevor die Flüssigkeit und anschließend nach dem Durchströmen des Überströmbereiches in einem zweiten Abschnitt des Strömungsumlenkungsbereichs wieder, bezogen auf die Hochachsenrichtung, nach unten bzw. vom Technikdeckel weg zu dem in der Bodenwand der unteren Gehäuseschale angeordneten und/oder ausgebildeten Flüssigkeits-Auslauf strömt. Bei dieser Ausführungsvariante ist bevorzugt vorgesehen, dass das Ventilelement so am Technikdeckel, vorzugsweise in einer rohrförmigen Aufnahme an der in Hochachsenrichtung Oberseite des Technikdeckels, gehaltert und/oder so in den Strömungsweg eingebunden ist, dass das Ventilelement, vorzugsweise ein Verschlussteil des Ventilelementes, den Strömungsweg, vorzugsweise den Überströmbereich, in der Schließstellung verschließt und in einer Offenstellung freigibt. Mit einer derartigen Ausführungsvariante kann besonders platzsparend und kompakt gebaut werden, weil das Ventilelement dadurch platzsparend an der Oberseite des Technikdeckels angeordnet werden kann und lediglich so in den Strömungsweg einragen muss bzw. in den Strömungsweg eingebunden sein muss, dass der Überströmbereich verschließbar und öffenbar ist. Insbesondere ermöglicht eine derartige konstruktive Variante den liegenden Einbau eines Ventilelementes, so dass insgesamt nur wenig Platz und Bauraum für die Anordnung der Technikkomponenten benötigt wird. Die Begrifflichkeit Überströmbereich ist dabei breit auszulegen und zu verstehen. So kann der Überströmbereich gemäß einer ersten beispielhaften Variante zum Beispiel durch eine technikdeckelseitige Überströmöffnung gebildet sein, die durch eine Verlagerung eines Verschlussteils des Ventilelementes verschlossen wird. Alternativ dazu kann der Überströmbereich aber ebenso gut einen im Strömungsweg liegenden Durchströmbereich des Ventilelementes aufweisen, der mit einem Verschlussteil des Ventilelementes, zum Beispiel mittels einer Membrananordnung, verschließbar bzw. öffenbar ist. Dies sind nur zwei Beispiele die verdeutlichen sollen, dass der technikdeckelseitige Überströmbereich auf unterschiedlichste Weise ausgebildet werden kann.

Bezüglich der oberen und unteren Gehäuseschalen ist ein Aufbau bevorzugt, bei dem die, vorzugsweise wannenförmig ausgebildete, obere Gehäuseschale und die, vorzugsweise wannenförmig ausgebildete, untere Gehäuseschale jeweils einander zugeordnete ringförmig umlaufende Umfangsrandbereiche aufweisen, die im montierten Zustand aneinander angrenzen, und zwar vorzugsweise unter Zwischenschaltung eines ringförmig umlaufenden Dichtelementes dicht aneinander angrenzen. Mit derartig einander zueinander zugeordneten ringförmig umlaufenden Umfangsrandbereichen ergibt sich eine besonders einfache und funktionssichere Anlage, Abdichtung und Verbindungsmöglichkeit für die beiden Gehäuseschalen.

Beispielsweise können für eine besonders bevorzugte Verbindungslösung an einer der beiden Gehäuseschalen am Außenumfang mehrere in Umfangsrichtung voneinander beabstandete Einschraubdome vorgesehen sein, denen an der anderen Gehäuseschale ebenfalls am Außenumfang angeordnete Abstütz- und Durchschraubdome zugeordnet sind. Dies erfolgt bevorzugt dergestalt, dass die Einschraubdome und die Abstütz- und Durchschraubdome im montierten Zustand des Gehäuses in Schraubrichtung gesehen im Wesentlichen fluchtend übereinanderliegen und eine Verbindungsschraube unter Abstützung am Abstütz- und Durchschraubdom durch diesen und den Einschraubdom hindurchgeführt ist und endseitig so mit einer am Einschraubdom abstützbaren Schraubenmutter gesichert ist, dass der Abstütz- und Durchschraubdom mit dem Einschraubdom verspannt ist. Bei dieser Lösung ist der Einschraubdom somit eigentlich auch ein Durchschraubdom, durch den die Verbindungsschraube durchgesteckt bzw. durchgeführt ist. Aber auch eine Lösung ohne Schraubmutter, bei der die Verbindungsschraube direkt in den dann ein Muttergewinde aufweisenden Einschraubdom eingeschraubt wird, ist jederzeit denkbar und möglich. Dies bewirkt eine besonders zuverlässige und funktionssichere Festlegung der beiden Gehäuseschalen aneinander.

Das ringförmige Dichtelement ist bevorzugt so ausgebildet, dass es in Umfangsrichtung voneinander beabstandete Ausnehmungen aufweist, durch die im montierten Zustand im Inneren und/oder randseitig angeordnete zapfenartige Vorsprünge der oberen Gehäuseschale und/oder der unteren Gehäuseschale eingreifen, wobei bevorzugt vorgesehen ist, dass die Ausnehmungen die zapfenartigen Vorsprünge form- und konturangepasst umschließen. Dies erlaubt eine besonders lagegenaue Positionierung des Dichtelementes, so dass ein Fehlverbau derselben ausgeschlossen ist. Eine besondere funktionsintegrierte Lösung ergibt sich dann, wenn wenigstens ein Teil der zapfenartigen Vorsprünge (vorzugsweise alle zapfenartigen Vorsprünge) durch die Einschraubdome und/oder die Abstütz- und Durchschraubdome selbst gebildet ist.

Für eine besonders bevorzugte Verbindung der beiden Gehäuseschalen wird vorgeschlagen, dass an jedem der beiden in Längsrichtung gegenüberliegenden Gehäuseenden jeweils zwei Dompaare aus Abstütz- und Durchschraubdom sowie Durchschraub- bzw. Einschraubdom an den in Querrichtung gegenüberliegenden Eckbereichen dieser Gehäuseenden vorgesehen sind. Gleichzeitig sind an den beiden in Querrichtung gegenüberliegenden Übergangsbereichen zwischen dem schmalen Griffbereich und dem verbreiterten Kopfbereich jeweils ein Dompaar aus einem Abstütz- und Durchschraubdom sowie einem Durchschraub- bzw. Einschraubdom vorgesehen. Mit einer derartigen Anordnung von Dompaaren ergibt sich zudem auch ein insgesamt hochwertiger designtechnischer Gesamteindruck.

Bezüglich der bereits zuvor erwähnten Batterieaufnahme ist es weiter besonders vorteilhaft, wenn sich die Batterieaufnahme mitsamt der darin aufgenommenen wenigstens einen Batterie in Längsrichtung erstreckt, insbesondere bei mehreren Batterien diese in Längsrichtung hintereinander im Batteriefach aufgenommen sind, weil dadurch eine insgesamt langgestreckte und schmalbauende Gehäuseausgestaltung möglich wird. Für einen einfachen Zugang zum Batteriefach ist zum Beispiel vorgesehen, dass in der oberen Gehäuseschale ein abnehmbarer Batteriefach-Deckel im Bereich oberhalb des Batteriefachs angeordnet ist.

Die Batterieaufnahme weist bevorzugt eine langgestreckte Trägerplatte auf, die mittels wenigstens einer Steckverbindung an dem Strömungskanal lösbar gehaltert ist. Hierzu ist bevorzugt vorgesehen, dass die Trägerplatte der Batterieaufnahme an den gegenüberliegenden Enden jeweils eine Stecköffnung aufweist, mittels der die Batterieaufnahme auf Steckzapfen des Strömungskanals aufgesteckt wird, zum Beispiel auf im Bereich des Technikdeckels und im Bereich des ersten Strömungskanalabschnittes bzw. des Gehäuseendes angeordnete Steckzapfen aufsteckbar ist. Zur Sicherung der Steckverbindung kann eine Sicherungsscheibe vorgesehen werden, die auf die Steckzapfen aufgesteckt wird und die Trägerplatte in der gewünschten Position sichert und festlegt, zum Beispiel in einer Anlageverbindung an dem Strömungskanal hält.

Ein besonders kompakter Aufbau ergibt sich auch dann, wenn sich der erste Strömungskanalabschnitt des Strömungskanals in der unteren Gehäuseschale zwischen quer zur Längsrichtung beabstandeten Seitenwänden der unteren Gehäuseschale erstreckt, wobei zur lösbaren Befestigung des Batteriefach-Deckels wenigstens eine Befestigungsschraube vorgesehen ist, die in einen vorzugsweise an der oberen Gehäuseschale angeordneten Batteriefachdeckel-Schraubdom einschraubbar ist. Gemäß einer weiteren besonders bevorzugten Ausführungsform der Erfindung ist am Gehäuse, vorzugsweise benachbart zu einem Flüssigkeits-Auslauf und/oder an der bezogen auf die Hochachsenrichtung Unterseite des Gehäuses, ein Haltebügel ausgebildet und/oder angeordnet, insbesondere für eine Halterung und/oder Auflage der Dosiervorrichtung an einem Öffnungsrandbereich einer Behälter- oder Gefäßöffnung eines zu befüllenden Behälters oder Gefäßes. Mit einem derartigen Haltebügel ist sichergestellt, dass die Dosiervorrichtung vom Bediener während des Dosiervorgangs nicht gehalten werden muss, sondern zum Beispiel einfach am Öffnungsrandbereich des Behälters oder Gefäßes angeordnet werden kann. Der Haltebügel kann dabei durch ein separates Bauteil gebildet sein, der mit dem Gehäuse verbunden ist. Alternativ dazu kann der Haltebügel aber auch integral mit dem Gehäuse ausgebildet sein, insbesondere materialeinheitlich und/oder einstückig mit diesem verbunden sein.

Besonders vorteilhaft ist es in diesem Zusammenhang, wenn die Dosiervorrichtung im mittels des Haltebügels an einem Öffnungsrandbereich einer Behälter- oder Gefäßöffnung eines zu befüllenden Behälters oder Gefäßes gehalterten Zustand auf dem Öffnungsrandbereich dergestalt aufliegt, dass der Flüssigkeits-Auslauf in Richtung Behälter- oder Gefäßinnenraum zeigt und/oder die Bedieneinheit für eine Betätigung frei zugänglich ist, insbesondere bezogen auf die Hochachsenrichtung von oben her frei zugänglich ist.

Gemäß einer besonders vorteilhaften Ausführungsvariante ist der Haltebügel dabei so ausgebildet und an der Dosiervorrichtung angeordnet, dass die auf dem Öffnungsrandbereich aufliegende Dosiervorrichtung mit ihrem außerhalb des Behälters oder Gefäßes liegenden Teilbereich nach unten abkippbar und mit einem Abstützbereich des Haltebügels an der Behälter- oder Gefäßaußenwand abstützbar ist. Dies kann zum Beispiel dadurch erreicht werden, dass der Schwerpunkt der Dosiervorrichtung (bzw. der Dosiervorrichtung mit Anschlussteilen) in deren am Öffnungsrandbereich aufliegenden und gehalterten Zustand außerhalb des Behälters oder Gefäßes liegt. Um bei dieser abkippbaren Variante, bei der sich der Haltebügel mit einem Abstützbereich an der Behälter- oder Gefäßaußenwand abstützt, ein Abrutschen der Dosiervorrichtung zu vermeiden, ist am Gehäuse der Dosiervorrichtung ein Widerlager vorgesehen, das im abgekippten, gehalterten Zustand der Dosiervorrichtung von der Behälter- oder Gefäßinnenseite her am Öffnungsrandbereich anliegt und sich dort abstützt. Das Widerlager kann grundsätzlich auf unterschiedliche Weise ausgebildet werden, so zum Beispiel durch einen gehäuseseitigen Vorsprung oder durch eine gehäuseseitige Nase, um nur zwei Beispiele zu nennen. Für eine besonders vorteilhafte und funktionsintegrierte Lösung, bei der Bauteile in einer Doppelfunktion verwendet werden, kann vorgesehen sein, dass der Flüssigkeits-Auslauf ein vom Gehäuse abragendes Auslasselement, vorzugsweise einen rohrförmigen Auslassstutzen aufweist, das das Widerlager ausbildet.

Der Haltebügel selbst weist bevorzugt einen von dem Gehäuse, vorzugsweise von der Unterseite des Gehäuses, der Dosiervorrichtung abragenden Haltebügelbereich auf. Insbesondere dieser Haltebügelbereich ist dazu geeignet, den Abstützbereich des Haltebügels auszubilden.

Gemäß einer konkreten Ausgestaltung kann der von dem Gehäuse, vorzugsweise von der Unterseite des Gehäuses, abragende Haltebügelbereich L-förmig ausgebildet sein und einen ersten Schenkel, der von dem Gehäuse, vorzugsweise von der Unterseite des Gehäuses, abragt, sowie einen zweiten L-Schenkel aufweisen, der vom freien Endbereich des ersten L-Schenkels in Richtung der Flüssigkeits-Auslaufseite und/oder in Richtung der Behälter- oder Gefäßaußenwand abragt. Insbesondere mit einer derartigen einfach herzustellenden Geometrie ergibt sich eine besonders vorteilhafte Abstützung der Dosiervorrichtung in der gehalterten Stellung der Dosiervorrichtung.

Der abragende Haltebügelbereich kann dabei winklig von dem Gehäuse, vorzugsweise von der Unterseite des Gehäuses, abragen und in Richtung der Flüssigkeits-Auslaufseite und/oder in Richtung der Behälter- oder Gefäßaußenwand geneigt sein. Durch diese winklige Anstellung in Richtung der Flüssigkeits-Auslaufseite bzw. in Richtung der Behälter- oder Gefäßaußenwand wird gleichzeitig ein insgesamt kompakter, kleinbauender Aufbau zur Verfügung gestellt.

Der Haltebügel kann weiter einen an dem Gehäuse, vorzugsweise an der Unterseite des Gehäuses, vorzugsweise im Bereich des Flüssigkeits-Auslaufs, angeordneten, vorzugsweise lösbar festgelegten, Montagebügelbereich aufweisen, an den sich der Haltebügelbereich anschließt. Mit einem derartigen Montagebügelbereich ergibt sich eine einfache Festlegungsmöglichkeit des Haltebügels an dem Gehäuse. Alternativ dazu kann der Haltebügel aber auch, wie bereits zuvor ausgeführt, integral mit dem Gehäuse ausgebildet sein, insbesondere materialeinheitlich und/oder einstückig mit diesem verbunden sein.

Gemäß einer weiteren besonders bevorzugten Ausgestaltung ist vorgesehen, dass der von dem Gehäuse, vorzugsweise von der Unterseite des Gehäuses, abragende Haltebügelbereich in Längsrichtung des Gehäuses gesehen von dem Flüssigkeits-Auslauf beabstandet ist, vorzugsweise näher in Richtung zum schmalen Griffbereich liegt als der, vorzugsweise in etwa mittig, an der Unterseite des verbreiterten Kopfbereichs angeordnete Flüssigkeits-Auslauf. Damit ergeben sich besonders günstige Verhältnisse für eine abgekippte Lagerung der Dosiervorrichtung, wie sie bereits zuvor ausführlich dargelegt worden ist.

Besonders vorteilhaft kann der Montagebügelbereich am verbreiterten Kopfbereich an der Unterseite des Gehäuses angeordnet werden, wobei bevorzugt vorgesehen ist, dass der Montagebügelbereich plattenförmig mit einer der Unterseite des verbreiterten Kopfbereiches im Wesentlichen entsprechenden Außenkontur ausgebildet ist und eine Ausnehmung für den Flüssigkeits-Auslauf aufweist. Mit einem derartigen Aufbau folgt der Montagebügelbereich der Kontur des verbreiterten Kopfbereiches und fügt sich somit designtechnisch hervorragend in die Gesamtkonstruktion der Dosiervorrichtung ein.

Grundsätzlich kann der Haltebügel mehrteilig aus unterschiedlichen Bauteilen, die miteinander verbunden werden, hergestellt sein. Besonders vorteilhaft ist jedoch eine Ausführungsform, bei der der Haltebügel einstückig und materialeinheitlich ausgebildet ist, zum Beispiel aus einem Metall oder einem Kunststoff. Beispielsweise kann der Haltebügel dann als Blechbiegebauteil oder aber auch aus Kunststoffformteil ausgebildet sein.

Der Haltebügel bzw. der Haltebügel und seine Bestandteile können grundsätzlich auf besonders einfache Weise durch einen Draht gebildet sein. Für eine flächigere Abstützung ist der Haltebügel bzw. der Haltebügel und seine Bestandteile jedoch, bezogen auf die Erstreckung in Querrichtung, flächig und plattenförmig ausgebildet, zum Beispiel als Blechbiegebauteil aus einer Blechplatte gebogen.

Der Flüssigkeits-Auslauf kann auf verschiedene Weise ausgebildet sein. Besonders bevorzugt weist dieser ein Anschlusselement, insbesondere ein Kupplungselement, für eine Flüssigkeitsleitung, auf. Die Anordnung des Anschlusselementes kann vorzugsweise unter Zwischenschaltung eines Dichtelementes erfolgen. Insbesondere in Verbindung mit einem derartigen Anschlusselement kann vorgesehen sein, dass das Anschlusselement das vom Gehäuse abragende Auslasselement und damit das Widerlager ausbildet.

Entsprechend kann auch am Flüssigkeits-Zulauf ein Anschlusselement, insbesondere ein Kupplungselement, für eine Flüssigkeitsleitung angeordnet sein, vorzugsweise unter Zwischenschaltung eines Dichtelementes angeordnet sein.

Weiter kann im Bereich des Flüssigkeits-Zulaufs auch ein Sieb angeordnet sein, insbesondere um etwaige Störstoffe frühzeitig funktionssicher herausfiltern zu können.

Weiter kann die Bedieneinheit der Steuereinrichtung ein an einer Sicht- bzw. Außenseite des Gehäuses, insbesondere an der Sicht- bzw. Außenseite der oberen Gehäuseschale, angeordnetes Bedienfeld mit wenigstens einer Taste und/oder mit wenigstens einem Display und/oder mit wenigstens einem Sichtfenster für ein Display aufweisen.

Die Bedieneinheit selbst kann eine Start-Taste aufweisen, bei deren Betätigung die Steuereinrichtung einen Dosiervorgang startet, insbesondere mit oder ohne SollwertVorgabe startet. Besonders vorteilhaft ist jedoch eine Bedieneinheit, bei der, vorzugsweise über wenigstens eine Eingabetaste der Bedieneinheit, ein Sollwert für eine abzugebende Flüssigkeitsmenge vorgebbar und/oder einstellbar ist, wobei die Steuereinrichtung das Ventilelement selbsttätig schließt sobald ein mittels der Messeinrichtung erfasster Istwert der den Strömungskanal durchströmenden Flüssigkeitsmenge dem mittels der Bedieneinheit vorgegebenen und/oder eingestellten Sollwert entspricht. Insbesondere in Verbindung mit einer derartigen Sollwertvorgabe ergibt sich eine wesentliche Vereinfachung für den Bediener, der den Befüllvorgang nicht jedes Mal separat überwachen muss.

Ferner kann die Steuereinrichtung eine Memory-Funktion aufweisen, mittels der über wenigstens eine Memory-Taste der Bedieneinheit wenigstens ein Sollwert abspeicherbar ist. Dies ist insbesondere bei sich wiederholenden Befüllvorgängen von Vorteil.

Weiter kann die Bedieneinheit eine Eingabetaste aufweisen, bei deren Betätigung keine Sollwertvorgabe erfolgt, so dass bei einer Betätigung der Start-Taste die Dosiervorrichtung solange Flüssigkeit abgibt, bis die Flüssigkeitszufuhr gestoppt wird, vorzugsweise durch erneutes Betätigen der Start-Taste oder durch Betätigen einer Stopp-Taste gestoppt wird. In diesem Zusammenhang kann vorgesehen werden, dass die in diesem Betriebsmodus abgegebene Flüssigkeitsmenge über ein Display anzeigbar ist.

Die Erfindung betrifft weiterhin eine Anordnung einer Dosiervorrichtung an einem Öffnungsrandbereich eines Behälters mit einer Behälteröffnung.

Ferner betrifft die Erfindung die Verwendung einer erfindungsgemäßen Dosiervorrichtung zur Abgabe einer vorbestimmten Flüssigkeitsmenge, insbesondere einer vorbestimmten Wassermenge.

Die vorstehend erläuterten und/oder in den Unteransprüchen wiedergegebenen vorteilhaften Aus- und Weiterbildungen der Erfindung können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen werden nachfolgend anhand lediglich beispielhafter und schematischer Zeichnungen näher erläutert.

Es zeigen:
- Fig. 1: eine schematische, perspektivische Draufsicht auf eine beispielhafte Ausführungsform einer erfindungsgemäßen Dosiervorrichtung,
- Fig. 2: eine Seitenansicht der Ausführungsform gemäß Fig. 1,
- Fig. 3: eine schematische und perspektivische Explosionsdarstellung des Aufbaus und der Bauteile der Dosiervorrichtung gemäß Fig. 1,
- Fig. 4: einen Schnitt entlang der Linie A-A der Fig. 1, wobei hier der gesamte Strömungskanal aus Übersichtlichkeitsgründen schwarz eingefärbt ist,
- Fig. 5: eine vergrößerte Darstellung der Einzelheit X aus Fig. 4, wobei hier lediglich der Technikdeckel des Strömungskanals aus Übersichtlichkeitsgründen schwarz eingefärbt ist,
- Fig. 6: eine Seitenansicht einer an einem Öffnungsrandbereich eines Behälters angeordneten Dosiervorrichtung, und
- Fig. 7: eine Darstellung entsprechend der Fig. 6 in einer perspektivischen Draufsicht.

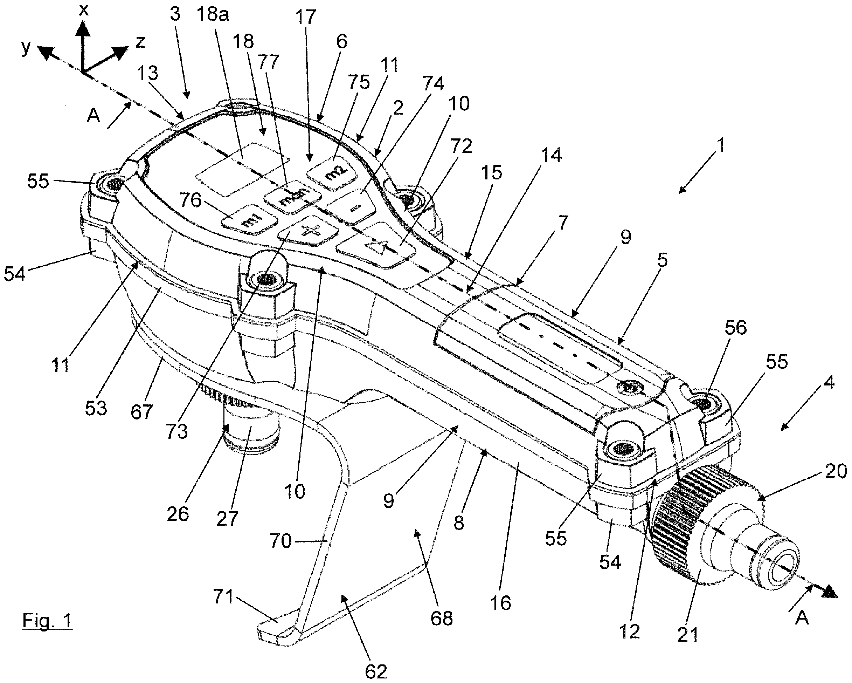

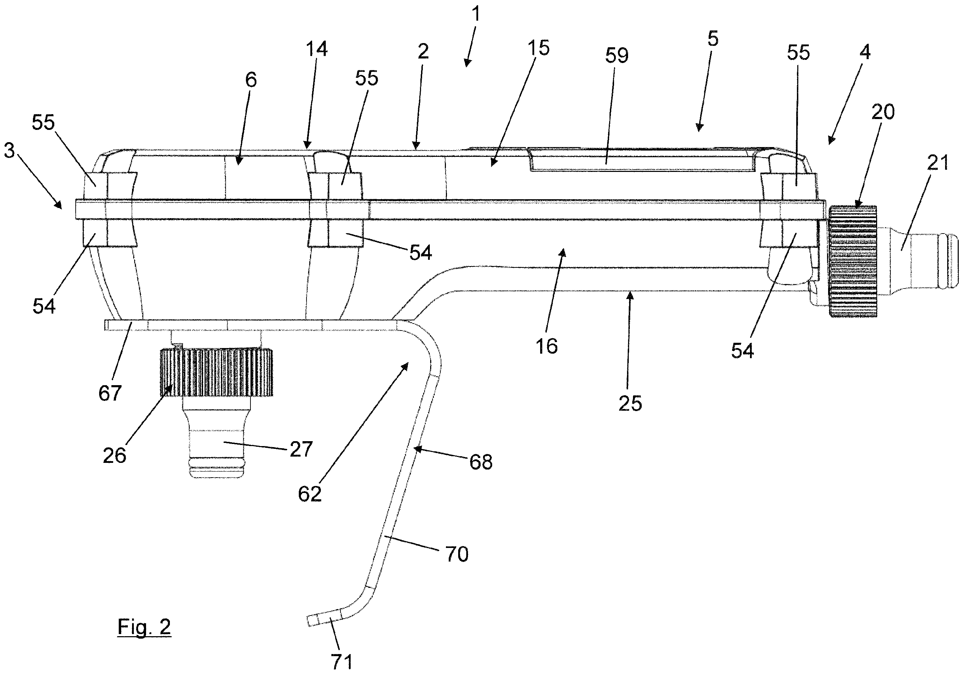

In den Fig. 1 und 2 ist eine perspektivische Draufsicht sowie eine Seitenansicht einer beispielhaften Ausführungsform einer erfindungsgemäßen Dosiervorrichtung 1 zur Abgabe einer vorbestimmten Flüssigkeitsmenge, zum Beispiel einer vorbestimmten Wassermenge, gezeigt.

Die Dosiervorrichtung umfasst ein Gehäuse 2, das hier stabartig bzw. I-förmig ausgebildet ist und sich zu einem der beiden in Längsrichtung gegenüberliegenden Gehäuseenden hin, hier insbesondere quer zur Längsrichtung y und auch in Hochachsenrichtung x gesehen, verbreitert, insbesondere pleuelartig verbreitert. Dadurch weist das Gehäuse 2 einen schmalen Griffbereich 5 und einen sich an den schmalen Griffbereich 5 anschließenden und gegenüber diesem verbreiterten Kopfbereich 6 auf. Wie dies insbesondere aus der Zusammenschau der Fig. 1 und 2 ersichtlich ist, verbreitert sich der Kopfbereich hier also somit sowohl in Hochachsenrichtung x als auch in Querrichtung z gegenüber dem schmalen Griffbereich 5, was aber lediglich beispielhaft zu verstehen ist. Auch lediglich eine Verbreiterung in Hochachsenrichtung x oder in Querrichtung z wäre grundsätzlich möglich.

Wie dies insbesondere aus der Fig. 1 ersichtlich ist, ist das Gehäuse 2, bezogen auf die Draufsicht auf das Gehäuse 2, hinsichtlich seiner in Querrichtung gegenüberliegenden und in Längsrichtung y verlaufenden Seitenkanten 7, 8 im Wesentlichen achsensymmetrisch mit einer in Längsrichtung verlaufenden Symmetrieachse ausgebildet, die in der Darstellung der Fig. 1 schematisch durch die Schnittlinie A-A gebildet ist.

Wie aus dieser Fig. 1 ersichtlich ist, ist der schmale Griffbereich 5 des Gehäuses 2 von zwei in Längsrichtung y verlaufenden und einander in Querrichtung z beabstandet gegenüberliegenden ersten Seitenkantenbereichen 9 begrenzt, an die sich in Längsrichtung y gesehen jeweils ein nach außen in Richtung von der Symmetrieachse weg erstreckender und die Gehäusekontur in Querrichtung z verbreitender Übergangsbereich 10 anschließt.

An diese Übergangsbereiche 10 schließt sich wiederum jeweils ein in Längsrichtung y verlaufender zweiter Seitenkantenbereich 11 an, wobei die zweiten Seitenkantenbereiche 11 den gegenüber dem schmalen Griffbereich 5 in Querrichtung z verbreiternden Kopfbereich 6 ausbilden und dementsprechend einen größeren Abstand zur Symmetrieachse als die ersten Seitenkantenbereiche 11 aufweisen.

Wie dies aus der Fig. 1 weiter entnommen werden kann, verlaufen die ersten Seitenkantenbereiche 9 in Längsrichtung y gesehen im Wesentlichen parallel zueinander und/oder geradlinig und sind an einem, dem verbreiterten Kopfbereich 6 gegenüberliegenden Gehäuseende 4 mit einer in Querrichtung z verlaufenden hier geradlinig ausgebildeten (ggf. aber auch gekrümmten) Griffbereich-Querkante 12 verbunden.

Die Übergangsbereiche 10 sind hier nach außen von der Symmetrieachse weg gekrümmt, und zwar im Wesentlichen S-förmig gekrümmt, während die zweiten Seitenkantenbereiche 11 in Richtung zur Symmetrieachse hin leicht gekrümmt sind und endseitig mit einer in Querrichtung z verlaufenden, hier mehr oder weniger geradlinigen (ggf. auch gekrümmten) Kopfbereich-Querkante 13 verbunden sind. Sowohl die Griffbereich-Querkante 12 als auch die Kopfbereich-Querkante 13 sind hier in der Darstellung in der Fig. 1 im Wesentlichen geradlinig verlaufend gezeichnet, könnten jedoch, wie beschrieben, auch eine Krümmung aufweisen.

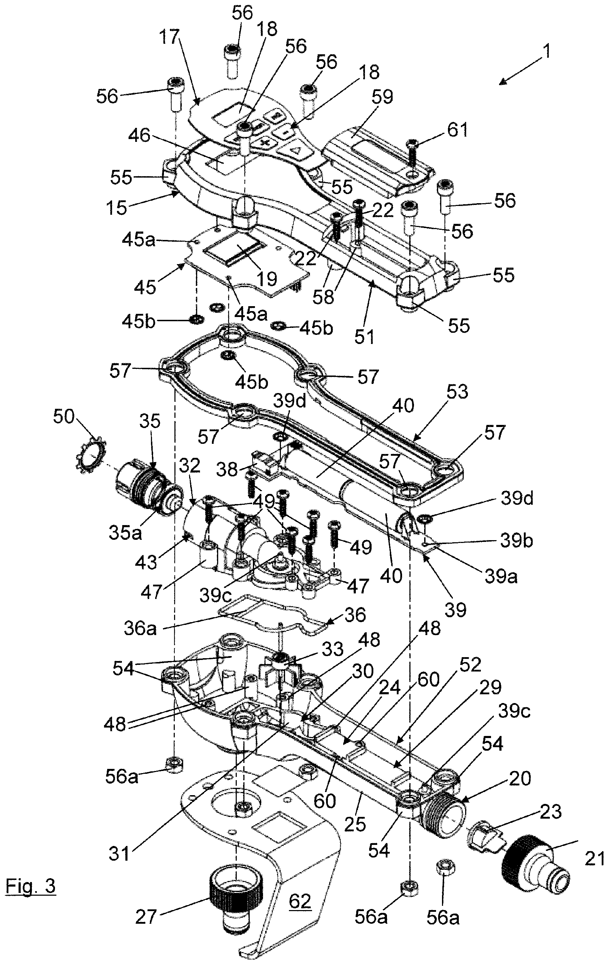

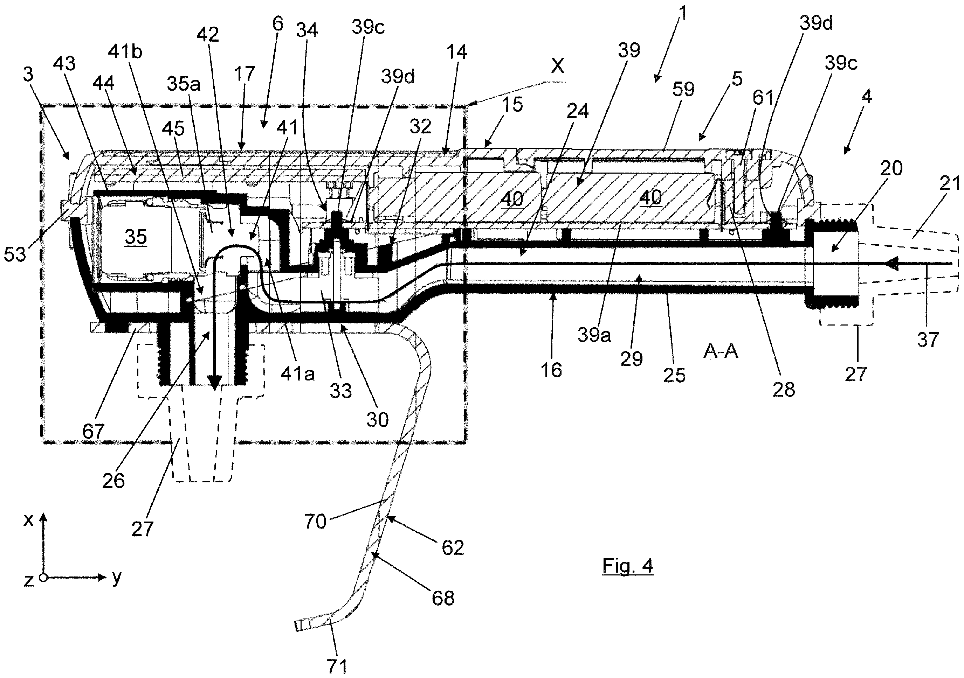

Wie dies insbesondere auch aus den Fig. 3 und 4 ersichtlich ist, ist das einen Hohlraum als Aufnahmeraum umschließende Gehäuse 2 zweischalig mit einer bezogen auf die Hochachsenrichtung x im Wesentlichen horizontalen Gehäuse-Trennebene ausgebildet, wobei das zweiteilige Gehäuse eine obere, wannenförmige und auf ihrer Sicht- bzw. Außenseite 14 mit einer Bedieneinheit 17 versehenen Gehäuseschale 15 und eine untere, wannenförmige Gehäuseschale 16 aufweist, die im montierten Zustand miteinander verbunden sind, und zwar, wie dies nachstehend noch näher erläutert wird, lösbar miteinander verbunden sind.

Die Bedieneinheit 17, die auch als Bedienelement bezeichnet werden kann, ist als Bestandteil der Steuereinrichtung mit dieser signalübertragend gekoppelt, so dass die Dosiervorrichtung 1 mittels der Bedieneinheit 17 betätigbar ist. Hierzu weist die, vorzugsweise folienartig ausgebildete Bedieneinheit 17 ein an der Sicht- bzw. Außenseite 14 der oberen Gehäuseschale 15 angeordnetes Bedienfeld 18 mit mehreren Tasten und einem Sichtfenster 19a für ein Display 19 einer nachstehend noch näher beschriebenen Steuerungs-Platine 45 auf. Die Bedieneinheit 18 ist hierbei bevorzugt oberflächenbündig in die die Oberseite ausbildende Sicht- und Außenseite 14 integriert. Auf die Betätigung bzw. Aktivierung der Dosiervorrichtung in Verbindung mit der Bedieneinheit 17 und dem Bedienfeld 18 wird nachstehend noch näher eingegangen.

Wie dies weiter insbesondere aus den Fig. 3 und 4 ersichtlich ist, umfasst die Dosiervorrichtung 1 weiter einen gehäuseseitigen Flüssigkeits-Zulauf 20, der hier stirnseitig an dem Gehäuseende 4 des schmalen Griffbereichs 5 an der unteren Gehäuseschale 16 angeordnet ist.

Am Flüssigkeits-Zulauf 20 ist ferner ein Anschlusselement 21 bzw. Kupplungselement für eine Flüssigkeitsleitung (nicht dargestellt) angeordnet, und zwar unter Zwischenschaltung eines hier nicht gezeigten Dichtelementes und/oder eines Siebes 23.

Von diesem Flüssigkeits-Zulauf 20 ausgehend erstreckt sich ein Strömungskanal 24 in Längsrichtung y des Gehäuses 2 bodenwandseitig in der unteren Gehäuseschale 16 bis zum verbreiterten Kopfbereich 6 und mündet dort, hier beispielhaft in etwa mittig und zentral, in der eine untere Bodenwand des Gehäuses 2 ausbildenden Bodenwand 25 der unteren Gehäuseschale 16. Die Mündungsöffnung ist hier Bestandteil eines Flüssigkeits-Auslaufs 26, der weiter ein von der Unterseite des Gehäuses 2 bzw. der unteren Gehäuseschale 16 abragendes Auslasselement 27 aufweist, das hier lediglich beispielhaft ebenfalls als Anschlusselement bzw. Kupplungselement für eine Flüssigkeitsleitung ausgebildet ist. Auch hier kann ggf. ein Dichtelement vorgesehen sein.

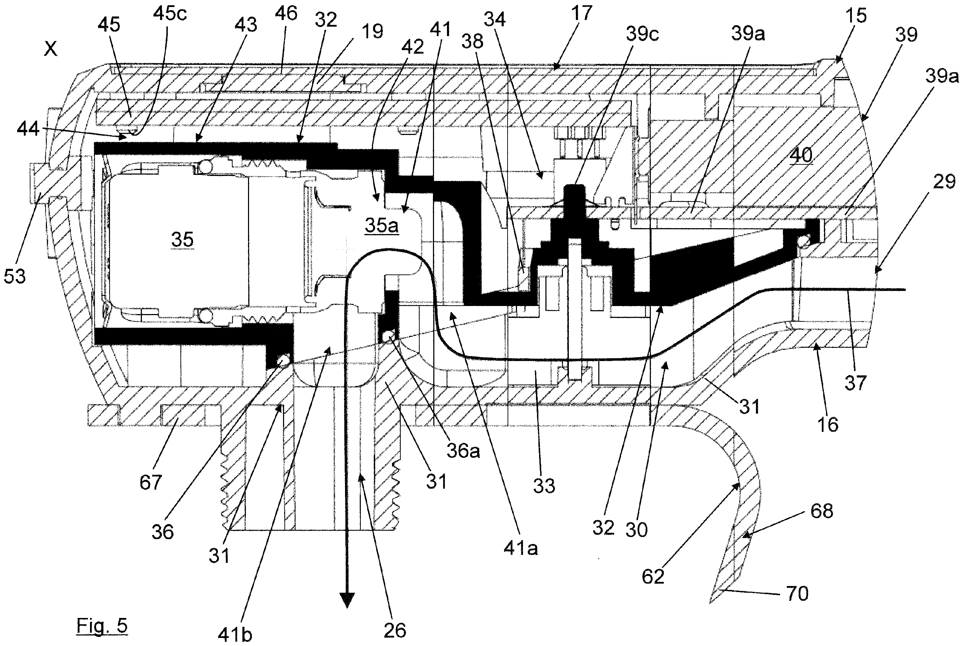

Wie dies weiter insbesondere der eine vergrößerte Detailansicht X der Fig. 4 zeigenden Fig. 5 entnommen werden kann, verläuft der Strömungskanal 24 hier bodenwandseitig in der unteren Gehäuseschale 16 und weist im schmalen Griffbereich 5 einen ersten Strömungskanalabschnitt 29 auf, an den sich ein in dem verbreiterten Kopfbereich 6 hinein erstreckender zweiter Strömungskanalabschnitt 30 anschließt, der hier beispielhaft in etwa ab dem Übergangsbereich zum verbreiterten Kopfbereich 6 bzw. kurz davor, mehrteilig ausgebildet ist und einen nach oben zur oberen Gehäuseschale 15 hin offenen ersten, unteren Wandabschnitt 31 aufweist, der zur Ausbildung eines geschlossenen Strömungskanals bzw. Strömungsweges mit einem abnehmbaren, deckelartigen oberen Wandabschnitt des zweiten Strömungskanalabschnittes 30 dicht verschließbar ist. Dieser deckelartige obere Wandabschnitt ist hier als Technikdeckel 32 ausgebildet.

An diesem Technikdeckel 32 ist ein Flügelrad 33 einer als Flügelrad-Durchflussmesser ausgebildeten Messeinrichtung 34 und ein Ventilelement 35 dergestalt gelagert bzw. angeordnet, dass das Flügelrad 33 bzw. ein Verschlussteil 36 des Ventilelementes im Strömungsweg des Strömungskanals 24 angeordnet sind. Der Strömungsweg der Flüssigkeit ist in der Fig. 4 durch den Strömungspfeil 37 dargestellt.

Wie bereits zuvor ausgeführt, ist die Messeinrichtung 34 hier beispielhaft als Flügelrad-Durchflussmesser ausgebildet und weist diese ein im Strömungskanal 24 angeordnetes und am Technikdeckel 32 drehbar gelagertes Flügelrad 33 sowie einen mit dem Flügelrad 33 zusammenwirkenden Messaufnehmer 38 auf, der die Drehbewegung des Flügelrades 33 erfasst und als Signal an eine Steuer- und Auswerteelektronik der Steuereinrichtung übermittelt.

Wie dies insbesondere der Fig. 5 entnommen werden kann, ist die Messeinrichtung 34 hier in Flüssigkeits-Strömungsrichtung gesehen stromauf des Ventilelements 35 angeordnet, und zwar im zweiten Strömungskanalabschnitt 30 des verbreiterten Kopfbereichs 6.

Der Messaufnehmer 38 kann hier beispielsweise durch einen magnetfeld-gesteuerten Impulsgeber gebildet sein, der die Drehbewegung in ein durchflussproportionales Signal umwandelt und der Steuer- und Auswertelektronik der Steuereinrichtung zuführt.

Wie dies insbesondere aus der Fig. 4 ersichtlich ist, ist der im schmalen Griffbereich 5 verlaufende erste Strömungskanalabschnitt 29 an seiner in Hochachsenrichtung x gesehen Oberseite im Wesentlichen eben bzw. gerade verlaufend ausgebildet und bildet ein Auflager für eine Batterieaufnahme 39 aus, in der hier beispielhaft zwei Batterien 40 in Längsrichtung gesehen hintereinander aufgenommen sind, die zur Energieversorgung mittelbar oder unmittelbar mit der Steuereinrichtung, der Bedieneinheit 17, dem Ventilelement 35 und der Messeinrichtung 34 gekoppelt sind.

Wie aus der Fig. 4 ersichtlich ist, erstreckt sich die Batterieaufnahme 39 bis in den Bereich des Flügelrades 33 und liegt dort, was wiederum insbesondere sehr gut aus der Fig. 5 ersichtlich ist, oberhalb des Flügelrades 33 am Technikdeckel 32 auf, wobei hier dann der Messaufnehmer 38 an dieser Batterieaufnahme 39 angeordnet und damit dem Flügelrad 33 zugeordnet ist.

Der durch den Technikdeckel 32 und den unteren Wandabschnitt 31 ausgebildete Bereich des zweiten Strömungskanalabschnittes 30 weist einen im Wesentlichen U-förmigen Strömungs-Umlenkungsbereich 41 auf, der so ausgebildet ist (Fig. 5), dass die vom unteren Wandabschnitt her in den Umlenkungsbereich 41 einströmende Flüssigkeit zunächst in einem ersten Abschnitt 41a des Umlenkungsbereichs 41 in Hochachsenrichtung x gesehen nach oben bzw. in Richtung Technikdeckel 32 zu einem im Technikdeckel 32 ausgebildeten, öffnungsartigen Überströmbereich 42 strömt, in dem die Strömungsumlenkung stattfindet, bevor die Flüssigkeit anschließend nach dem Durchströmen des Überströmbereichs 42 in einem zweiten Abschnitt 41b des Umlenkungsbereichs 41 wieder bezogen auf die Hochachsenrichtung x nach unten bzw. vom Technikdeckel 32 weg zu dem in der Bodenwand 25 der unteren Gehäuseschale angeordneten bzw. ausgebildeten Flüssigkeits-Auslauf 26 strömt.

Das Ventilelement 35 ist hier beispielhaft so in einer rohrförmigen Aufnahme 43 an der in Hochachsenrichtung x gesehen Oberseite des Technikdeckels 32 gehaltert, dass der Überströmbereich 42 einen im Strömungsweg liegenden Durchströmbereich 35a des Ventilelementes 35 aufweist, der mit einem hier nicht gezeigten Verschlussteil (zum Beispiel einer Membrananordnung) des Ventilelementes 35 verschließbar bzw. öffenbar ist.

Wie dies insbesondere der Zusammenschau der Figuren 4 und 5 entnommen werden kann, überragt der verbreiterte Kopfbereich 6 den schmalen Griffbereich 5 in Hochachsenrichtung x gesehen an der Unterseite und ist damit der bodenwandseitig in der unteren Gehäuseschale 16 verlaufende zweite Strömungskanalabschnitt 30 gegenüber dem ebenfalls bodenwandseitig in der unteren Gehäuseschale 16 verlaufenden ersten Strömungskanalabschnitt 29 in Hochachsenrichtung x nach unten versetzt. Dadurch kann im Bereich oberhalb des Technikdeckels 32 ein Freiraum 44 vorgesehen werden, in dem eine die Steuereinrichtung ausbildende oder Bestandteil der Steuereinrichtung bildende Steuerungs-Platine 45, die insbesondere in der Explosionsdarstellung der Figur 3 gut ersichtlich ist, angeordnet und aufgenommen ist.

Diese Steuerungs-Platine 45 weist die mit der Bedieneinheit 17, mit der Messeinrichtung 34 und mit dem Ventilelement 35 signalübertragend gekoppelte Steuer- und Auswerteelektronik auf. Weiter weist diese Steuerungs-Platine 45 das Display 19 auf, das im montierten Zustand (sh. Figur 1) einer Gehäuseausnehmung 46 in der Sicht- bzw. Außenseite 14 als Oberseite des Gehäuses 2 zugeordnet ist, so dass das Display 19 durch das Sichtfenster 18a des Bedienfeldes 18 sichtbar ist.

Wie dies aus der Figur 3 lediglich schematisch ersichtlich ist, kann die Steuerungs-Platine 45 mittels einer hier nicht in allen Details gezeigten Steckverbindung an der oberen Gehäuseschale 15 lösbar festgelegt werden. Hierzu weist die Steuerungs-Platine 45 hier lediglich beispielhaft mehrere Stecköffnungen 45a auf, mittels der die Steuerungs-Platine 45 auf in der Figur 3 nicht gezeigte Steckzapfen 45c (siehe Figur 5) der oberen Gehäuseschale 15 aufsteckbar und in diesem aufgesteckten Zustand mittels einer auf die Steckzapfen 45c aufsteckbaren Sicherungsscheibe 45b festlegbar ist.

Durch diese Maßnahmen gelingt es, das Gehäuse 2 bzw. die obere Gehäuseschale 15 an der Sicht- und Außenseite 14 im Wesentlichen glatt bzw. eben auszubilden. Lediglich auf der der Sicht- und Außenseite 14 gegenüberliegenden Unterseite ist der vorstehend bereits beschriebene Überstand im verbreiterten Kopfbereich 6 erforderlich, um dort die Technikkomponenten in der beschriebenen Weise aufzunehmen.

Wie dies insbesondere aus der Figur 3 ersichtlich ist, ist der Technikdeckel 32 hier durch ein separates Bauteil gebildet und mittels mehrerer Schraubverbindungen lösbar in der unteren Gehäuseschale 16 festgelegt ist. Die Schraubverbindungen weisen hier mehrere am Außenumfang des Technikdeckels 32 voneinander beabstandete Abstütz- und Durchschraubdome 47 auf, denen in der unteren Gehäuseschale 16 angeordnete Einschraubdome 48 dergestalt zugeordnet sind, dass die Einschraubdome 48 und die Abstütz- und Durchschraubdome 47 im montierten Zustand fluchtend übereinanderliegen und eine Verbindungsschraube 49 der Schraubverbindung unter Abstützung am Abstütz- und Durchschraubdom 47 durch diesen hindurch in den Einschraubdom 48 einschraubbar ist, um den Abstütz- und Durchschraubdom 47 mit dem Einschraubdom 48 zu verspannen.

Wie aus der Figur 3 ersichtlich ist, wird der Technikdeckel 32 hier mittels insgesamt acht Schraubverbindungen im Inneren der unteren Gehäuseschale 16 festgelegt, wobei jeweils vier Schraubverbindungen auf jeder der beiden Längsseiten vorgesehen und angeordnet sind.

Zur Abdichtung des Technikdeckels 32 gegenüber dem unteren Wandabschnitt 31 ist hier ein Dichtelement 36 vorgesehen, das hier als im Wesentlichen ringförmiges Dichtelement 36 ausgebildet ist, das zwischen den einander zugeordneten bzw. aneinander angrenzenden Randabschnitten des Technikdeckels 32 und des unteren Wandabschnittes 31 angeordnet ist. Ferner ist innerhalb des ringförmigen Dichtelementes 36 ein Quersteg 36a vorgesehen, der dazu dient, den Technikdeckel 32 im U-förmigen Strömungs-Umlenkungsbereich 41 zuverlässig abzudichten.

Aus der Figur 3 ist des Weiteren gut zu entnehmen, dass die rohrförmige Aufnahme 43 so am Technikdeckel 32 angeordnet ist, dass das Ventilelement 35 einfach von der offenen Seite her in den Technikdeckel 32 eingeschoben und eingesetzt werden kann. Für die sichere Verspannung und Halterung des Ventilelementes 35 ist ferner ein Feder- bzw. Zackenring 50 vorgesehen.

Wie dies ebenfalls insbesondere aus der Figur 3 ersichtlich ist, weisen die wannenförmig ausgebildete obere Gehäuseschale 15 und die wannenförmig ausgebildete untere Gehäuseschale 16 jeweils einander zugeordnete ringförmig umlaufende Umfangsrandbereiche 51, 52 auf, die im montierten Zustand (sh. Figur 1) aneinander angrenzen, und zwar unter Zwischenschaltung eines ringförmig umlaufenden Dichtelementes 53 dicht aneinander angrenzen.

An der unteren Gehäuseschale 16 sind hier am Außenumfang mehrere in Umfangsrichtung voneinander beabstandete Durchschraub- bzw. Einschraubdome 54 vorgesehen, denen an der oberen Gehäuseschale 15 ebenfalls am Außenumfang angeordnete Abstütz- und Durchschraubdome 55 zugeordnet sind. Die Zuordnung erfolgt so, dass die Durchschraub- bzw. Einschraubdome 54 und die Abstütz- und Durchschraubdome 55 im montierten Zustand (Figur 1) des Gehäuses 2 in Schraubrichtung gesehen im Wesentlichen fluchtend übereinanderliegen und eine Verbindungsschraube 56 unter Abstützung am Abstütz- und Durchschraubdom 55 durch diesen und den Durchschraub- bzw. Einschraubdom 54 hindurchgeführt ist und endseitig so mit einer am Durchschraub- bzw. Einschraubdom 54 abstützbaren Schraubenmutter 56a gesichert ist, dass der Abstütz- und Durchschraubdom 55 mit dem Durchschraub- bzw. Einschraubdom 54 verspannt ist.

Wie dies weiter aus der Figur 3 gut ersichtlich ist, sind hier insgesamt sechs derartige Dompaarungen am Außenumfang des Gehäuses 2 vorgesehen, wobei jeweils drei achssymmetrisch auf in Querrichtung z gegenüberliegenden Seiten angeordnet sind.

Alternativ könnte, was hier aber nicht dargestellt ist, der Durchschraub- bzw. Einschraubdom 54 aber auch ein Innengewinde aufweisen und könnte die Verbindungsschraube somit in den dann reinen Einschraubdom eingeschraubt werden. Eine derartige Verbindungstechnik ist im hier gezeigten Beispielfall optional und als weitere Verbindungsmöglichkeit zwischen den beiden Gehäuseschalen 15 und 16 vorgesehen, und zwar in Verbindung mit den an und im Inneren der oberen Gehäuseschale 15 im Bereich der Batterieaufnahme vorgesehenen Abstütz- und Durchschaubdomen 58, denen Einschraubdome 60 in der unteren Gehäuseschale 16 zugeordnet sind. Die Zuordnung erfolgt so, dass die Einschraubdome 60 und die Abstütz- und Durchschraubdome 58 im montierten Zustand des Gehäuses 2 in Schraubrichtung gesehen im Wesentlichen fluchtend übereinanderliegen und eine Verbindungsschraube 22 unter Abstützung am Abstütz- und Durchschraubdom 58 durch diesen hindurch in den jeweils zugeordneten Einschraubdom 60 eingeschraubt ist.

Aus der Figur 3 ist weiter ersichtlich, dass das ringförmige Dichtelement 53 in Umfangsrichtung voneinander beabstandete Ausnehmungen 57 aufweist, in die im montierten Zustand die Einschraubdome 54 bzw. die Abstütz- und Durchschraubdome 55 eingreifen.

Hierbei ist besonders bevorzugt vorgesehen, dass die Ausnehmungen 57 des Dichtelementes 53 die zapfenartigen Vorsprünge ausbildenden Dome form- und konturangepasst umschließt.

Wie dies bereits zuvor ausgeführt worden ist, erstreckt sich die Batterieaufnahme 39 mitsamt den darin aufgenommenen Batterien 40 in Längsrichtung y des Gehäuses 2, wobei in der oberen Gehäuseschale 15 ein abnehmbarer Batteriefach-Deckel 59 im Bereich oberhalb der Batterieaufnahme 39 angeordnet ist.

Die Batterieaufnahme 39 weist eine langgestreckte Trägerplatte 39a auf, die an den gegenüberliegenden Enden jeweils eine Stecköffnung 39b aufweist, mittels der die Batterieaufnahme auf Steckzapfen 39c des Strömungskanals 27 im Bereich des Technikdeckels 32 und im Bereich des ersten Strömungskanalabschnittes 29 bzw. des Gehäuseendes 4 aufsteckbar und in diesem aufgesteckten Zustand mittels einer auf die Steckzapfen 39c aufsteckbaren Sicherungsscheibe 39d festlegbar ist.

Wie dies der Figur 3 in Zusammenschau mit der Figur 4 weiter entnommen werden kann, erstreckt sich der erste Strömungskanalabschnitt 29 des Strömungskanals 24 in der unteren Gehäuseschale 16 zwischen quer zur Längsrichtung y beabstandeten Seitenwänden der unteren Gehäuseschale 16, wobei zur lösbaren Befestigung des Batteriefach-Deckels 59 eine Befestigungsschraube 61 vorgesehen ist, die in einen vorzugsweise an der oberen Gehäuseschale 15 angeordneten Batteriefachdeckel-Schraubdom 28 (siehe Figur 4) einschraubbar ist.

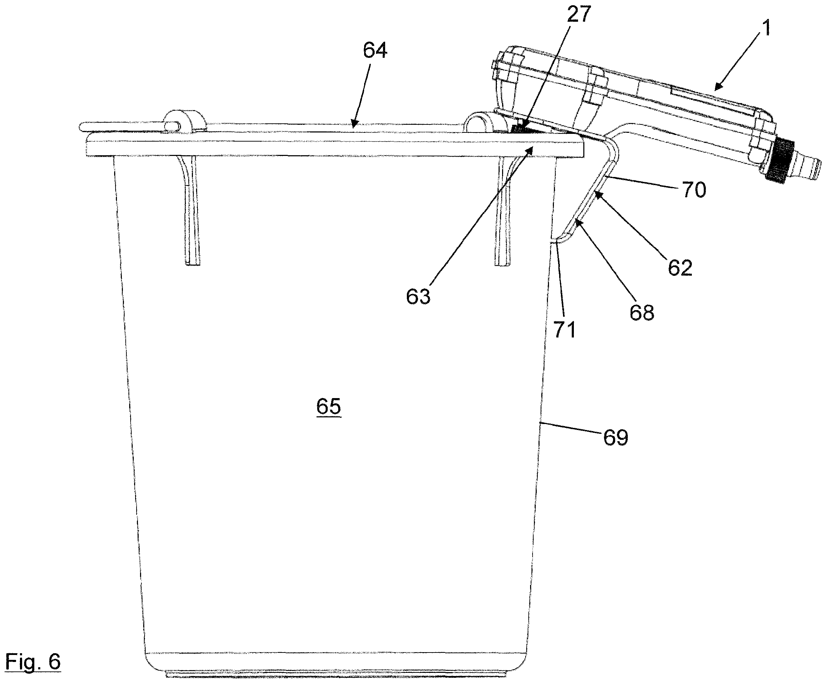

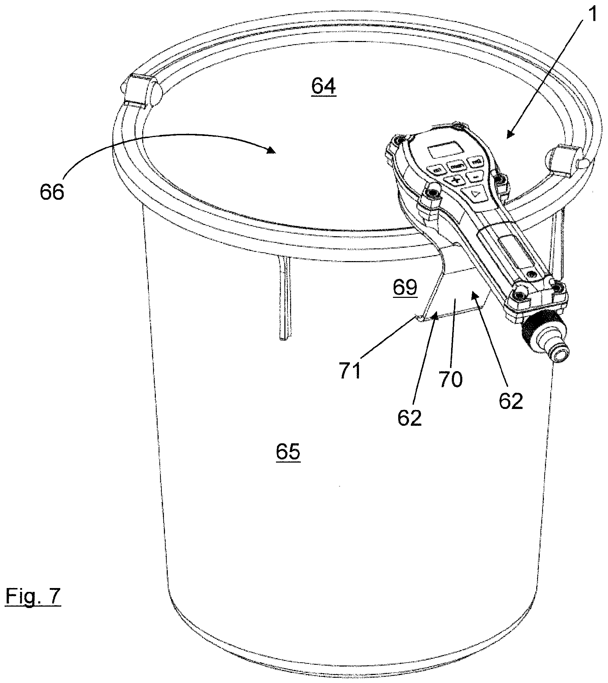

Wie dies aus den Figuren weiter ersichtlich ist, ist an der bezogen auf die Hochachsenrichtung x Unterseite des Gehäuses 2 bzw. der unteren Gehäuseschale 16 ein Haltebügel 62 angeordnet, mittels dem die Dosiervorrichtung 1 an einem Öffnungsrandbereich 63 einer Behälteröffnung 64 eines zu befüllenden Behälters 65 gehaltert werden kann (siehe insbesondere auch Fig. 6 und 7).

Wie dies den beiden Fig. 6 und 7 entnommen werden kann, liegt die Dosiervorrichtung 1 im mittels des Haltebügels 62 am Öffnungsrandbereich 63 gehalterten Zustand auf dem Öffnungsrandbereich 63 dergestalt auf, dass der Flüssigkeits-Auslauf 26 in Richtung Behälterinnenraum 66 zeigt und die Bedieneinheit 17 für eine Betätigung von oben her frei zugänglich ist.

Der Haltebügel 62 ist hier zum Beispiel durch ein plattenförmiges Blechbiegebauteil oder Kunststoffformteil gebildet, das einen im Bereich des Flüssigkeits-Auslaufs 26 angeordneten und dort vorzugsweise lösbar festgelegten Montagebügelbereich 67 aufweist, an den sich ein von der Unterseite des Gehäuses 2 bzw. der unteren Gehäuseschale 16 abragender, L-förmig ausgebildeter Haltebügelbereich anschließt, der einen Abstützbereich 68 ausbildet.

Wie dies insbesondere aus den Fig. 6 und 7 ersichtlich ist, ist der Haltebügel 62 hierbei so ausgebildet und an der Dosiervorrichtung 1 angeordnet, dass die auf dem Öffnungsrandbereich 63 aufliegende Dosiervorrichtung 1 mit ihrem außerhalb des Behälters 65 liegenden Teilbereich nach unten abkippbar und mit dem Abstützbereich 68 des Haltebügels an der Außenwand 69 des Behälters 65 abstützbar ist. Damit die Dosiervorrichtung 1 in dieser Position gehalten wird, liegt der Schwerpunkt der Dosiervorrichtung 1 bzw. der Dosiervorrichtung 1 mit etwaigen Anschlussteilen in deren am Öffnungsrandbereich 63 aufliegenden und gehalterten Zustand außerhalb des Behälters 65.

Wie dies weiter aus der Fig. 6 ersichtlich ist, bildet das rohrstutzenartige Auslasselement 27 des Flüssigkeits-Auslaufs 26 hier ein von der Unterseite des Gehäuses 2 abragendes Widerlager aus, das im abgekippten, gehalterten Zustand der Dosiervorrichtung 1 von der Behälterinnenseite her am Öffnungsrandbereich 63 anliegt und sich dort abstützt.

Konkret ist der Abstützbereich 68 hier L-förmig ausgebildet und weist einen ersten L-Schenkel 70 sowie einen zweiten L-Schenkel 71 auf, der vom freien Endbereich des ersten L-Schenkels 70 in Richtung der Flüssigkeits-Auslaufseite bzw. in Richtung der Behälter-Außenwand 69 abragt. Der Abstützbereich ragt dabei winklig von der Unterseite des Gehäuses 2 ab und ist in Richtung der Flüssigkeits-Auslaufseite bzw. in Richtung der Außenwand 69 des Behälters 65 geneigt.

Der Montagebügelbereich 67 entspricht hinsichtlich seiner Außenkontur im Wesentlichen der Außenkontur des verbreiterten Kopfbereiches 6, so dass sich dieser in das Gesamtdesign einfügt.

Mit einer derartigen Haltebügel-Ausgestaltung wird auf zuverlässige Weise ein sicheres Halten der Dosiervorrichtung am Öffnungsrandbereich 63 eines Behälters 65 erreicht, und zwar auch im Betrieb der Dosiervorrichtung 1, so dass auf komplizierte Klemmungen, Federn, Klammern, etc. verzichtet werden kann.

Ersichtlich braucht bei der erfindungsgemäßen Lösung die Dosiervorrichtung 1 lediglich auf den Öffnungsrandbereich 63 aufgelegt werden, das Auslasselement 27 als Widerlager am oberen Öffnungsrandbereich 63 angelegt und abgestützt werden und dann die Dosiervorrichtung 1 solange nach unten außerhalb des Behälters 65 abgekippt werden, bis der zweite L-Schenkel 71 des Abstützbereichs 68 des Haltebügels 62 an der Außenwand 69 des Behälters 65 anliegt und abgestützt ist.

Wie dies weiter insbesondere den Figuren 1 bis 3 zu entnehmen ist, weist die Bedieneinheit 17 bzw. das Bedienfeld 18 eine Starttaste 72 auf, bei deren Betätigung die Steuereinrichtung einen Dosiervorgang startet. Dabei kann über die beiden Eingabetasten 73, 74 der Bedieneinheit 17 ein Sollwert für eine abzugebende Flüssigkeitsmenge vorgegeben bzw. eingestellt werden, wobei die Steuereinrichtung das Ventilelement 35 selbsttätig schließt, sobald ein mittels der Messeinrichtung 34 erfasster Istwert der den Strömungskanal 24 durchströmenden Flüssigkeitsmenge dem mittels der Bedieneinheit 17 vorgegebenen bzw. eingestellten Sollwert entspricht.

Die Steuereinrichtung kann weiterhin eine Memoryfunktion aufweisen, mittels der über hier beispielsweise zwei Memorytasten 75, 76 der Bedieneinheit 17 Sollwerte abspeicherbar sind.

Die Bedieneinheit 17 weist weiter beispielhaft eine Eingabetaste 77 auf, bei deren Betätigung keine Sollwertvorgabe erfolgt, so dass bei einer Betätigung der Starttaste die Dosiervorrichtung 1 so lange Flüssigkeit abgibt, bis die Flüssigkeitszufuhr gestoppt wird. Die Flüssigkeitszufuhr kann dann beispielsweise durch erneutes Betätigen der Starttaste 72 oder der Eingabetaste 77 gestoppt werden.

### Bezugszeichenliste

- 1: Dosiervorrichtung
- 2: Gehäuse
- 3: Gehäuseende
- 4: Gehäuseende
- 5: schmaler Griffbereich
- 6: verbreiteter Kopfbereich
- 7: Seitenkante
- 8: Seitenkante
- 9: erste Seitenkantenbereiche
- 10: Übergangsbereiche
- 11: zweite Seitenkantenbereiche
- 12: Griffbereich-Querkante
- 13: Kopfbereich-Querkante
- 14: Sicht- bzw. Außenseite
- 15: obere Gehäuseschale
- 16: untere Gehäuseschale
- 17: Bedieneinheit
- 18: Bedienfeld
- 19: Display
- 20: Flüssigkeits-Zulauf
- 21: Anschlusselement
- 22: Verbindungsschraube
- 23: Sieb
- 24: Strömungskanal
- 25: Bodenwand
- 26: Flüssigkeits-Auslauf
- 27: Auslasselement
- 28: Batteriefachdeckel- Schraubdom
- 29: erster Strömungskanalabschnitt
- 30: zweiter Strömungskanalabschnitt
- 31: erster, unterer Wandabschnitt
- 32: Technikdeckel
- 33: Flügelrad
- 34: Messeinrichtung
- 35: Ventilelement
- 35a: Durchströmbereich
- 36: Dichtelement
- 36a: Quersteg
- 37: Strömungspfeil
- 38: Messaufnehmer
- 39: Batterieaufnahme
- 39a: Trägerplatte
- 39b: Stecköffnung
- 40: Batterien
- 39c: Steckzapfen
- 39d: Sicherungsscheibe
- 41: Strömungsumlenkungsbereich
- 41a: erster Abschnitt
- 41b: zweiter Abschnitt
- 42: Überströmöffnung
- 43: Aufnahme
- 44: Freiraum
- 45: Steuerungs-Platine
- 45a: Stecköffnung
- 45b: Sicherungsscheibe
- 45c: Steckzapfen
- 46: Gehäuseausnehmung
- 47: Abstütz- und Durchschraubdome
- 48: Einschraubdome
- 49: Verbindungsschraube
- 50: Zackenring
- 51: Umfangsrandbereich
- 52: Umfangsrandbereich
- 53: Dichtelement
- 54: Einschraubdome
- 55: Abstütz- und Durchschraubdome
- 56: Verbindungsschraube
- 56a: Schraubenmutter
- 57: Ausnehmungen
- 58: Abstütz- und Durchschraubdom
- 59: Batteriefachdeckel
- 60: Einschraubdom
- 61: Befestigungsschraube
- 62: Haltebügel
- 63: Öffnungsrandbereich
- 64: Behälteröffnung
- 65: Behälter
- 66: Behälterinnenraum
- 67: Montagebügelbereich
- 68: Abstützbereich
- 69: Außenwand
- 70: erster L-Schenkel
- 71: zweiter L-Schenkel
- 72: Starttaste
- 73: Eingabetaste
- 74: Eingabetaste
- 75: Memorytaste
- 76: Memorytaste
- 77: Eingabetaste
- 78: Ausnehmung

## Patentansprüche

1. Dosiervorrichtung (1) zur Abgabe einer vorbestimmten Flüssigkeitsmenge,
mit einem Gehäuse (2), das einen Flüssigkeits-Zulauf (20) und einen Flüssigkeits-Auslauf (26) aufweist, die mittels eines Strömungskanals (24) strömungsverbunden sind,
mit einem im Strömungsweg des Strömungskanals (24) angeordneten Ventilelement (35), das zur Absperrung oder Freigabe des Strömungsweges zum Flüssigkeits-Auslauf (26) zwischen einer Schließstellung und wenigstens einer Offenstellung verstellbar ist,
mit einer Messeinrichtung (34), mittels der die den Strömungskanal (24) in Richtung Flüssigkeits-Auslauf (26) durchströmende Durchflussmenge messbar ist,
mit einer Steuereinrichtung, die eine Bedieneinheit (17) aufweist oder mit einer Bedieneinheit (17) signalübertragend gekoppelt ist, wobei mittels der Bedieneinheit die Dosiervorrichtung (1) betätigbar ist,
wobei die Steuereinrichtung weiter mit dem Ventilelement (35) und mit der Messeinrichtung (34) steuerungstechnisch gekoppelt ist, wobei die Steuereinrichtung das Ventilelement (35) bei einer Betätigung der Dosiervorrichtung (1) in einer Offenstellung hält oder in eine Offenstellung überführt,
wobei das einen Hohlraum als Aufnahmeraum umschließende Gehäuse (2) zweischalig mit einer bezogen auf die Hochachsenrichtung im Wesentlichen horizontalen Gehäuse-Trennebene ausgebildet ist, wobei das zweiteilige Gehäuse (2) eine obere Gehäuseschale (15) und eine untere Gehäuseschale (16) aufweist, die im montierten Zustand miteinander verbunden sind,
**dadurch gekennzeichnet,**
**dass** der Strömungskanal (24) in einer der Gehäuseschalen (15, 16) verläuft und wenigstens bereichsweise mehrteilig ausgebildet ist mit einem nach oben zur anderen Gehäuseschale (15) hin offenen ersten Wandabschnitt (31), der zur Ausbildung eines geschlossenen Strömungsweges mit einem abnehmbaren, deckelartigen zweiten Wandabschnitt verschließbar ist, insbesondere dicht verschließbar ist, und
**dass** der deckelartige zweite Wandabschnitt als Technikdeckel (32) ausgebildet ist, an dem wenigstens ein Teil der Messeinrichtung (34) und wenigstens ein Teil des Ventilelementes (36) dergestalt lagerbar und/oder anordenbar ist, dass wenigstens ein Teil der Messeinrichtung (34) und des Ventilelementes (35) im Strömungsweg angeordnet ist.

2. Dosiervorrichtung nach Anspruch 1, **dadurch gekennzeichnet, dass** das Gehäuse (2) stabartig und/oder I-förmig ausgebildet ist, vorzugsweise stabartig und/oder I-förmig ausgebildet ist und sich zu einem der beiden in Längsrichtung gegenüberliegenden Gehäuseenden (3, 4) hin, quer zur Längsrichtung und/oder in Hochachsenrichtung gesehen, vorzugweise pleuelartig, verbreitert, so dass das Gehäuse (2) einen schmalen Griffbereich (5) und einen sich an den schmalen Griffbereich (5) anschließenden und gegenüber diesem, quer zur Längsrichtung und/oder in Hochachsenrichtung gesehen, verbreiterten Kopfbereich aufweist.

3. Dosiervorrichtung nach Anspruch 2, **dadurch gekennzeichnet,**
**dass** das Gehäuse (2), bezogen auf die Draufsicht auf das Gehäuse (2), hinsichtlich seiner in Querrichtung gegenüberliegenden und in Längsrichtung verlaufenden Seitenkanten (7, 8) im Wesentlichen achsensymmetrisch mit einer in Längsrichtung verlaufenden Symmetrieachse ausgebildet ist, dergestalt,
**dass** der schmale Griffbereich (5) des Gehäuses (2) von zwei in Längsrichtung verlaufenden und einander in Querrichtung beabstandet gegenüberliegenden ersten Seitenkantenbereichen (9) begrenzt ist, an die sich in Längsrichtung gesehen jeweils ein nach außen in Richtung von der Symmetrieachse weg erstreckender und die Gehäuseaußenkontur in Querrichtung verbreitender Übergangsbereich (10) anschließt, und
**dass** sich an die jeweiligen Übergangsbereiche (10) wiederum jeweils ein in Längsrichtung verlaufender zweiter Seitenkantenbereich (11) anschließt, wobei die zweiten Seitenkantenbereiche (11) den gegenüber dem schmalen Griffbereich (5) in Querrichtung verbreiterten Kopfbereich (6) ausbilden und einen größeren Abstand zur Symmetrieachse aufweisen als die ersten Seitenkantenbereiche (9).

4. Dosiervorrichtung nach einem der vorhergehenden Ansprüche, **dadurch gekennzeichnet, dass** das zweiteilige Gehäuse (2) eine obere, wannenförmige und/oder auf ihrer Sicht- bzw. Außenseite (14) die Bedieneinheit (17) aufweisende Gehäuseschale (15) und eine untere, wannenförmige Gehäuseschale (16) aufweist, die im montierten Zustand miteinander verbunden sind, insbesondere lösbar miteinander verbunden sind.

5. Dosiervorrichtung nach einem der Ansprüche 2 bis 4, **dadurch gekennzeichnet,**
**dass** der Flüssigkeits-Zulauf (20) stirnseitig an einem der beiden in Längsrichtung gegenüberliegenden Gehäuseenden (4) und/oder an dem schmalen Griffbereich (5) angeordnet ist, insbesondere an dem schmalen Griffbereich (5) stirnseitig an dem, dem verbreiterten Kopfbereich (6) gegenüberliegenden Gehäuseende (4) angeordnet ist, und
**dass** sich der Strömungskanal (24) vom Flüssigkeits-Zulauf (20) ausgehend in Längsrichtung des Gehäuses (2) in den Bereich des in Längsrichtung gegenüberliegenden Gehäuseendes (3) und/oder bis zum verbreiterten Kopfbereich (6) erstreckt und dort, vorzugsweise in einer bezogen auf die Hochachsenrichtung unteren Bodenwand (25) des Gehäuses (2), mündet, wobei die Mündungsöffnung den Flüssigkeits-Auslauf (26) ausbildet oder Bestandteil des Flüssigkeits-Auslaufes (26) ist.

6. Dosiervorrichtung nach einem der vorhergehenden Ansprüche, **dadurch gekennzeichnet,**
**dass** der Strömungskanal (24), vorzugsweise bodenwandseitig, in der unteren Gehäuseschale (16) verläuft und angeordnet ist und im schmalen Griffbereich (5) einen ersten Strömungskanalabschnitt (29) aufweist, an den sich ein in den verbreiterten Kopfbereich (6) hinein erstreckender zweiter Strömungskanalabschnitt (30) anschließt, der zumindest im verbreiterten Kopfbereich (6), vorzugsweise in etwa ab dem Übergangsbereich zum verbreiterten Kopfbereich (6), mehrteilig ausgebildet ist und den nach oben zur oberen Gehäuseschale (15) hin offenen ersten, unteren Wandabschnitt (31) aufweist, der zur Ausbildung des geschlossenen Strömungsweges mit dem abnehmbaren, deckelartigen, zweiten und oberen Wandabschnitt des zweiten Strömungskanalabschnittes (30) verschließbar ist, insbesondere dicht verschließbar ist.

7. Dosiervorrichtung nach einem der vorhergehenden Ansprüche, **dadurch gekennzeichnet, dass** die Messeinrichtung (34) in Flüssigkeits-Strömungsrichtung gesehen vor und damit stromauf des Ventilelementes (35) angeordnet ist und/oder dass der Flüssigkeits-Zulauf (20) an derjenigen Gehäuseschale angeordnet ist, in der der Strömungskanal (24) verläuft.

8. Dosiervorrichtung nach Anspruch 6 oder 7, **dadurch gekennzeichnet, dass** der zweite Strömungskanalabschnitt (30) in einer Bodenwand (25) der unteren Gehäuseschale (16) mündet und damit der Flüssigkeits-Auslauf (26) an der bezogen auf die Hochachsenrichtung Unterseite des Gehäuses (2) angeordnet ist.

9. Dosiervorrichtung nach einem der vorhergehenden Ansprüche, **dadurch gekennzeichnet,**
**dass** die Messeinrichtung (34) als Flügelrad-Durchflussmesser ausgebildet ist und ein im Strömungskanal (24) angeordnetes, drehbar gelagertes Flügelrad (33) sowie einen mit dem Flügelrad (33) zusammenwirkenden Messaufnehmer (38) aufweist, der die Drehbewegung des Flügelrades (33) erfasst und als Signal an eine Steuer- und Auswerteelektronik der Steuereinrichtung übermittelt.

10. Dosiervorrichtung nach einem der vorhergehenden Ansprüche, **dadurch gekennzeichnet,**
**dass** das Flügelrad (33) drehbar am Technikdeckel (32) gelagert und in dem Strömungskanal (24), vorzugsweise in dem zweiten Strömungskanalabschnitt (30), angeordnet ist, und
**dass** der Messaufnehmer (38) durch einen im Gehäuse (2) angeordneten, vorzugsweise magnetfeld-gesteuerten, Impulsgeber gebildet ist, der die Drehbewegung in ein durchflussproportionales Signal umwandelt und der Steuer- und Auswerteelektronik zuführt.

11. Dosiervorrichtung nach einem der Ansprüche 6 bis 10, **dadurch gekennzeichnet,**
**dass** der im schmalen Griffbereich verlaufende erste Strömungskanalabschnitt (5) an seiner in Hochachsenrichtung (29) gesehen Oberseite im Wesentlichen eben ausgebildet ist und/oder ein Auflager für eine Batterieaufnahme (39) ausbildet, in der wenigstens eine Batterie (40) aufgenommen ist, die zur Energieversorgung mittelbar oder unmittelbar mit der Steuereinrichtung und/oder mit der Bedieneinheit (17) und/oder mit dem Ventilelement (35) und/oder mit der Messeinrichtung (34) gekoppelt ist.

12. Dosiervorrichtung nach Anspruch 10 und 11, **dadurch gekennzeichnet, dass** sich die Batterieaufnahme (39) bis in den Bereich des Flügelrades (33) erstreckt, vorzugsweise oberhalb des Flügelrades (33) am Technikdeckel (32) aufliegt und/oder am Technikdeckel (32) gelagert ist, und
dass der Messaufnehmer (38) an der Batterieaufnahme (39) angeordnet und dem Flügelrad (33) zugeordnet ist.

13. Dosiervorrichtung nach einem der Ansprüche 6 bis 12, **dadurch gekennzeichnet,**
**dass** der durch den Technikdeckel (32) und den unteren Wandabschnitt (31) ausgebildete Bereich des zweiten Strömungskanalabschnittes (30) einen im Wesentlichen U-förmigen Strömungsumlenkungsbereich (41) aufweist, der so ausgebildet ist, dass die vom unteren Wandabschnitt (31) her in den Umlenkungsbereich (41) einströmende Flüssigkeit zunächst in einem ersten Abschnitt (41a) des Strömungsumlenkungsbereichs (41) in Hochachsenrichtung gesehen nach oben bzw. in Richtung Technikdeckel (32) zu einem im Technikdeckel (32) ausgebildeten Überströmbereich (42) strömt, in dem die Strömungsumlenkung stattfindet, bevor die Flüssigkeit anschließend nach dem Durchströmen des Überströmbereiches (42) in einem zweiten Abschnitt (41b) des Strömungsumlenkungsbereichs (41) wieder, bezogen auf die Hochachsenrichtung, nach unten bzw. vom Technikdeckel (32) weg zu dem in der Bodenwand (25) der unteren Gehäuseschale (16) angeordneten und/oder ausgebildeten Flüssigkeits-Auslauf (26) strömt, wobei bevorzugt vorgesehen ist, dass das Ventilelement (35) so am Technikdeckel (32), vorzugsweise in einer rohrförmigen Aufnahme (43) an der in Hochachsenrichtung Oberseite des Technikdeckels (32), gehaltert und/oder so in den Strömungsweg eingebunden ist, dass das Ventilelement (35), vorzugsweise ein Verschlussteil des Ventilelementes (35), den Strömungsweg, vorzugsweise den Überströmbereich (42), in der Schließstellung verschließt und in einer Offenstellung freigibt.

14. Dosiervorrichtung nach einem der vorhergehenden Ansprüche, **dadurch gekennzeichnet,**
**dass** am Gehäuse (2), vorzugsweise benachbart zu einem Flüssigkeits-Auslauf (26) und/oder an der bezogen auf die Hochachsenrichtung Unterseite des Gehäuses (2), ein Haltebügel (62) ausgebildet und/oder angeordnet ist, insbesondere für eine Halterung und/oder Auflage der Dosiervorrichtung (1) an einem Öffnungsrandbereich (63) einer Behälter- oder Gefäßöffnung (64) eines zu befüllenden Behälters (65) oder Gefäßes.

15. Dosiervorrichtung nach Anspruch 14, **dadurch gekennzeichnet,**
**dass** die Dosiervorrichtung (1) im mittels des Haltebügels (62) an einem Öffnungsrandbereich (63) einer Behälter- oder Gefäßöffnung (64) eines zu befüllenden Behälters (65) oder Gefäßes gehalterten Zustand auf dem Öffnungsrandbereich (63) dergestalt aufliegt, dass der Flüssigkeits-Auslauf (26) in Richtung Behälter- oder Gefäßinnenraum (66) zeigt und/oder die Bedieneinheit (17) für eine Betätigung frei zugänglich ist, insbesondere bezogen auf die Hochachsenrichtung von oben her frei zugänglich ist.

16. Dosiervorrichtung nach Anspruch 14 oder 15, **dadurch gekennzeichnet, dass** der Haltebügel (62) so ausgebildet und an der Dosiervorrichtung (1) angeordnet ist, dass die auf dem Öffnungsrandbereich (63) aufliegende Dosiervorrichtung (1) mit ihrem außerhalb des Behälters (65) oder Gefäßes liegenden Teilbereich nach unten abkippbar und mit einem Abstützbereich (68) des Haltebügels (62) an der Behälter- oder Gefäßaußenwand (69) abstützbar ist, was bevorzugt dadurch erreichbar ist, dass der Schwerpunkt der Dosiervorrichtung (1) bzw. der Dosiervorrichtung (1) mit Anschlussteilen in deren am Öffnungsrandbereich (63) aufliegenden und gehalterten Zustand außerhalb des Behälters (65) oder Gefäßes liegt, und
dass am Gehäuse (2) der Dosiervorrichtung (1) ein Widerlager ausgebildet ist, das im abgekippten, gehalterten Zustand der Dosiervorrichtung (1) von der Behälter- oder Gefäßinnenseite her am Öffnungsrandbereich (63) anliegt und sich dort abstützt, wobei bevorzugt vorgesehen ist, dass der Flüssigkeits-Auslauf (26) ein vom Gehäuse abragendes Auslasselement (27), vorzugsweise einen rohrförmigen Auslassstutzen, aufweist, das das Widerlager ausbildet.

17. Verwendung einer Dosiervorrichtung (1) nach einem der vorhergehenden Ansprüche zur Abgabe einer vorbestimmten Flüssigkeitsmenge, insbesondere einer vorbestimmten Wassermenge.

## Claims

1. Metering apparatus (1) for dispensing a predetermined quantity of liquid,
having a housing (2) which has a liquid inflow (20) and a liquid outflow (26) which are flow-connected by means of a flow channel (24),
having a valve arrangement (35) which is arranged in the flow path of the flow channel (24) and can be adjusted between a closed position and at least one open position for the purpose of blocking or clearing the flow path to the liquid outflow (26),
having a measuring device (34) by means of which the flow quantity flowing through the flow channel (24) in the direction of the liquid outflow (26) can be measured,
having a control device which has an operator control unit (17) or is coupled in a signal-transmitting manner to an operator control unit (17), wherein the metering apparatus (1) can be operated by means of the operator control unit,
wherein the control device is further coupled in terms of control to the valve element (35) and to the measuring device (34), wherein the control device holds the valve element (35) in an open position or moves the valve element to an open position when the metering apparatus (1) is operated,
wherein the housing (2) which encloses a cavity as a receiving space is formed from two shells with a housing separating plane which is substantially horizontal with respect to the vertical axis direction, wherein the two-part housing (2) has an upper housing shell (15) and a lower housing shell (16) which are connected to one another in the assembled state,
**characterized**
**in that** the flow channel (24) runs in one of the housing shells (15, 16) and is formed from multiple parts at least in regions with a first wall section (31) which is open at the top in the direction of the other housing shell (15) and can be closed, in particular can be closed in a sealing manner, for the purpose of forming a closed flow path with a removable, cover-like second wall section, and
**in that** the cover-like second wall section is in the form of a technical cover (32) on which at least one part of the measuring device (34) and at least one part of the valve element (36) can be mounted and/or can be arranged in such a way that at least one part of the measuring device (34) and of the valve element (35) is arranged in the flow path.

2. Metering apparatus according to Claim 1, **characterized in that** the housing (2) is of rod-like and/or I-shaped form, preferably of rod-like and/or I-shaped form and widens in the direction of one of the two housing ends (3, 4), which are situated opposite each other in the longitudinal direction, as seen transversely to the longitudinal direction and/or in the vertical axis direction, preferably in the manner of a connecting rod, so that the housing (2) has a narrow grip region (5) and a head region which adjoins the narrow grip region (5) and is widened in relation to this narrow grip region, as seen transversely to the longitudinal direction and/or in the vertical axis direction.

3. Metering apparatus according to Claim 2, **characterized**
**in that** the housing (2), with respect to the top view of the housing (2), with regard to its side edges (7, 8) which are situated opposite each other in the transverse direction and run in the longitudinal direction, is formed substantially axially symmetrically with an axis of symmetry running in the longitudinal direction in such a way
that the narrow grip region (5) of the housing (2) is delimited by two first side edge regions (9) which run in the longitudinal direction and are situated opposite each other with a spacing in the transverse direction, each of the said first side edge regions being adjoined, as seen in the longitudinal direction, by a transition region which extends outwards in the direction extending away from the axis of symmetry and widens the housing outer contour in the transverse direction, and
**in that** a respective second side edge region (11) which runs in the longitudinal direction in turn adjoins the respective transition regions (10), wherein the second side edge regions (11) form the head region (6) which is widened in relation to the narrow grip region (5) in the transverse direction and are at a greater distance from the axis of symmetry than the first side edge regions (9).

4. Metering apparatus according to one of the preceding claims, **characterized in that** the two-part housing (2) has an upper, tub-like housing shell (15) which also or alternatively has the operator control unit (17) on its visible or outer side (14) and has a lower, tub-like housing shell (16), which housing shells are connected to one another, in particular detachably connected to one another, in the assembled state.

5. Metering apparatus according to one of Claims 2 to 4, **characterized**
**in that** the liquid inflow (20), at the end side, is arranged at one of the two housing ends (4) which are situated opposite each other in the longitudinal direction and/or is arranged on the narrow grip region (5), in particular is arranged on the narrow grip region (5), at the end side, at the housing end (4) which is situated opposite the widened head region (6), and
**in that** the flow channel (24) extends, starting from the liquid inflow (20) in the longitudinal direction of the housing (2), into the region of the housing end (3) which is situated opposite in the longitudinal direction and/or as far as the widened head region (6) and issues there, preferably in a base wall (25) of the housing (2) at the bottom with respect to the vertical axis direction, wherein the issuing opening forms the liquid outflow (26) or is a constituent part of the liquid outflow (26).

6. Metering apparatus according to one of the preceding claims, **characterized**
**in that** the flow channel (24), preferably on the base wall, runs and is arranged in the lower housing shell (16) and has a first flow channel section (29) in the narrow grip region (5), the said first flow channel section being adjoined by a second flow channel section (30) which extends into the widened head region (6) and is formed from multiple parts at least in the widened head region (6), preferably approximately starting from the transition region to the widened head region (6), and has the first, lower wall section (31) which is open at the top in the direction of the upper housing shell (15) and can be closed, in particular can be closed in a sealing manner, by the removable, cover-like, second and upper wall section of the second flow channel section (30) for the purpose of forming the closed flow path.

7. Metering apparatus according to one of the preceding claims, **characterized**
**in that** the measuring device (34) is arranged in front of and therefore upstream of the valve element (35) in the liquid flow direction and/or in that the liquid inflow (20) is arranged on that housing shell in which the flow channel (24) runs.

8. Metering apparatus according to Claim 6 or 7, **characterized**
**in that** the second flow channel section (30) issues into a base wall (25) of the lower housing shell (16) and therefore the liquid outflow (26) is arranged on the bottom side of the housing (2) with respect to the vertical axis direction.

9. Metering apparatus according to one of the preceding claims, **characterized**
**in that** the measuring device (34) is in the form of an impeller flow meter and has a rotatably mounted impeller (33) which is arranged in the flow channel (24) and a measuring sensor (38) which interacts with the impeller (33) and detects the rotational movement of the impeller (33) and transmits the result as a signal to a control and evaluation electronics system of the control device.

10. Metering apparatus according to one of the preceding claims, **characterized**
**in that** the impeller (33) is rotatably mounted on the technical cover (32) and is arranged in the flow channel (24), preferably in the second flow channel section (30), and
**in that** the measuring sensor (38) is formed by a, preferably magnetic field-controlled, pulse generator which is arranged in the housing (2) and converts the rotational movement into a flow-proportional signal and feeds the said signal to the control and evaluation electronics system.

11. Metering apparatus according to one of Claims 6 to 10, **characterized**
**in that** the first flow channel section (5) which runs in the narrow grip region is of substantially planar form on the top side of the said first flow channel section as seen in the vertical axis direction (29) and/or forms a support for a battery receptacle (39) in which at least one battery (40) is accommodated, which battery is coupled indirectly or directly to the control device and/or to the operator control unit (17) and/or to the valve element (35) and/or to the measuring device (34) for the purpose of supplying power.

12. Metering apparatus according to Claims 10 and 11, **characterized**
**in that** the battery receptacle (39) extends into the region of the impeller (33), preferably rests on the technical cover (32) above the impeller (33) and/or is mounted on the technical cover (32), and
**in that** the measuring sensor (38) is arranged on the battery receptacle (39) and is associated with the impeller (33).

13. Metering apparatus according to one of Claims 6 to 12, **characterized**
**in that** the region of the second flow channel section (30) that is formed by the technical cover (32) and the lower wall section (31) has a substantially U-shaped flow deflection region (41) which is formed such that the liquid which flows from the lower wall section (31) into the deflection region (41) initially flows upwards as seen in the vertical axis direction or in the direction of the technical cover (32) to an overflow region (42), which is formed in the technical cover (32) and in which the flow deflection takes place, in a first section (41a) of the flow deflection region (41), before the liquid then, after flowing through the overflow region (42), again flows downwards with respect to the vertical axis direction or away from the technical cover (32) to the liquid outflow (26), which is arranged and/or formed in the base wall (25) of the lower housing shell (16), in a second section (41b) of the flow deflection region (41), wherein provision is preferably made for the valve element (35) to be held on the technical cover (32), preferably in a tubular receptacle (43) of the top side of the technical cover (32) in the vertical axis direction and/or to be incorporated into the flow path such that the valve element (35), preferably a closure part of the valve element (35), closes the flow path, preferably the overflow region (42), in the closed position and clears it in an open position.

14. Metering apparatus according to one of the preceding claims, **characterized**
**in that** a holding bracket (62) is formed and/or arranged on the housing (2), preferably adjacent to a liquid outflow (26) and/or on the bottom side of the housing (2) with respect to the vertical axis direction, in particular for holding and/or supporting the metering apparatus (1) on an opening edge region (63) of a container or vessel opening (64) of a container (65) or vessel to be filled.

15. Metering apparatus according to Claim 14, **characterized**
**in that** the metering apparatus (1), in the state in which it is held by means of the holding bracket (62) on an opening edge region (63) of a container or vessel opening (64) of a container (65) or vessel to be filled, rests on the opening edge region (63) in such a way that the liquid outflow (26) points in the direction of the container or vessel interior (66) and/or the operator control unit (17) is freely accessible for operation, in particular is freely accessible from above with respect to the vertical axis direction.

16. Metering apparatus according to Claim 14 or 15, **characterized**
**in that** the holding bracket (62) is formed and arranged on the metering apparatus (1) such that the metering device (1) which rests on the opening edge region (63), by way of its subregion which is situated outside the container (65) or vessel, can be tilted downwards and can be supported on the container or vessel outer wall (69) by way of a supporting region (68) of the holding bracket (62), it being possible for this to be achieved preferably in that the centre of gravity of the metering apparatus (1) or the metering apparatus (1) with connection parts lies outside the container (65) or vessel in the state in which the metering apparatus rests or is held on the opening edge region (63), and
**in that** an abutment is formed on the housing (2) of the metering apparatus (1) and in the tilted, held state of the metering apparatus (1) rests on the opening edge region (63) from the container or vessel inner side and is supported there, wherein provision is preferably made for the liquid outflow (26) to have an outlet element (27) which protrudes from the housing, preferably a tubular outlet nozzle, which outlet element forms the abutment.

17. Use of a metering apparatus (1) according to one of the preceding claims for dispensing a predetermined quantity of liquid, in particular a predetermined quantity of water.

## Revendications

1. Arrangement de dosage (1) destiné à délivrer une quantité de liquide prédéterminée,
comprenant un boîtier (2), qui possède une arrivée de liquide (20) et un orifice de décharge de liquide (26), lesquels sont en communication fluidique au moyen d'un canal d'écoulement (24),
comprenant un élément formant vanne (35) disposé dans le trajet d'écoulement du canal d'écoulement (24), lequel peut être positionné entre une position fermée et au moins une position ouverte en vue de bloquer ou de libérer le trajet d'écoulement vers l'orifice de décharge de liquide (26),
comprenant un dispositif de mesure (34) au moyen duquel peut être mesuré le débit qui s'écoule à travers le canal d'écoulement (24) en direction de l'orifice de décharge de liquide (26),
comprenant un dispositif de commande, lequel possède une unité d'opération (17) ou est couplée en transmission de signal avec une unité d'opération (17), l'arrangement de dosage (1) pouvant être actionné au moyen de l'unité d'opération,
le dispositif de commande étant en outre couplé en technologie de commande avec l'élément formant vanne (35) et avec le dispositif de mesure (34), le dispositif de commande, lors d'un actionnement de l'arrangement de dosage (1), maintenant l'élément formant vanne (35) dans une position ouverte ou le transférant dans une position ouverte,
le boîtier (2), qui entoure un espace creux faisant office d'espace d'accueil, étant configuré en deux coques avec un plan de séparation de boîtier sensiblement horizontal en référence à la direction de l'axe de hauteur, le boîtier (2) en deux parties possédant une coque de boîtier supérieure (15) et une coque de boîtier inférieure (16) qui, à l'état monté, sont reliées l'une à l'autre,
**caractérisé en ce**
**que** le canal d'écoulement (24) suit un tracé dans l'une des coques de boîtier (15, 16) et est configuré en plusieurs parties au moins dans certaines zones, avec une première portion de paroi (31) ouverte vers le haut en direction de l'autre coque de boîtier (15), laquelle peut être fermée, notamment fermée de manière étanche, avec une deuxième portion de paroi amovible en forme de couvercle en vue de former un trajet d'écoulement fermé, et
**que** la deuxième portion de paroi en forme de couvercle est réalisée sous la forme d'un couvercle technique (32) au niveau duquel au moins une partie du dispositif de mesure (34) et au moins une partie de l'élément formant vanne (36) peuvent être montées et/ou disposées de telle sorte qu'au moins une partie du dispositif de mesure (34) et de l'élément formant vanne (35) est disposé dans le trajet d'écoulement.

2. Arrangement de dosage selon la revendication 1, **caractérisé en ce que** le boîtier (2) est réalisé en forme de barre et/ou en forme de I, de préférence réalisé en forme de barre et/ou en forme de I et s'élargissant en direction de l'une des deux extrémités de boîtier (3, 4), opposées l'une à l'autre dans la direction longitudinale, vu transversalement à la direction longitudinale et/ou dans la direction de l'axe de hauteur, de préférence à la manière d'une bielle, de sorte que le boîtier (2) possède une zone de préhension (5) étroite et une zone de tête, qui se rattache à la zone de préhension (5) et qui s'élargit par rapport à celle-ci, vue transversalement à la direction longitudinale et/ou dans la direction de l'axe de hauteur.

3. Arrangement de dosage selon la revendication 2, **caractérisé en ce**
**que** le boîtier (2), en référence à la vue de dessus sur le boîtier (2), du point de vue de ses bords latéraux (7, 8) mutuellement opposés dans la direction transversale et suivant un tracé dans la direction longitudinale, est de configuration sensiblement à symétrie axiale avec un axe de symétrie qui suit un tracé dans la direction longitudinale, de sorte
**que** la zone de préhension (5) étroite du boîtier (2) est délimitée par deux premières zones de bord latéral (9) mutuellement opposées qui suivent un tracé dans la direction longitudinale et espacées l'une de l'autre dans la direction transversale, auxquelles se rattache respectivement, vue dans la direction longitudinale, une zone de transition (10) qui s'étend vers l'extérieur dans une direction à l'écart de l'axe de symétrie et qui élargit le contour extérieur de boîtier dans la direction transversale, et
**qu'**une deuxième zone de bord latéral (11) se rattache aux zones de transition (10) respectives, à sont tour à chaque fois dans la direction longitudinale, les deuxièmes zones de bord latéral (11) formant la zone de tête (6) qui s'élargit dans la direction transversale par rapport à la zone de préhension (5) étroite et présentant un écart plus grand par rapport à l'axe de symétrie que les premières zones de bord latéral (9).

4. Arrangement de dosage selon l'une des revendications précédentes, **caractérisé en ce que** le boîtier (2) respectif possède une coque de boîtier supérieure (15), en forme de cuvette et/ou possédant l'unité d'opération (17) sur son côté visible ou extérieur (14), et une coque de boîtier inférieure (16) qui, à l'état monté, sont reliées l'une à l'autre, sont notamment reliées l'une à l'autre de manière amovible.

5. Arrangement de dosage selon l'une des revendications 2 à 4, **caractérisé en ce**
**que** l'arrivée de liquide (20) est disposée du côté frontal au niveau de l'une des extrémités de boîtier (4) opposées l'une à l'autre dans la direction longitudinale et/ou au niveau de la zone de préhension (5) étroite, notamment au niveau de la zone de préhension (5) étroite du côté frontal au niveau de l'extrémité de boîtier (4) qui se trouve à l'opposé de la zone de tête (6) élargie, et
**que** le canal d'écoulement (24) s'étend à partir de l'arrivée de liquide (20) dans la direction longitudinale du boîtier (2) dans la zone de l'extrémité de boîtier (3) qui se trouve à l'opposé dans la direction longitudinale et/ou jusqu'à la zone de tête (6) élargie et, de là, débouche de préférence dans une paroi de fond (25) du boîtier (2) basse en référence à la direction de l'axe de hauteur, l'ouverture de débouché formant l'orifice de décharge de liquide (26) ou étant un élément constitutif de l'orifice de décharge de liquide (26).

6. Arrangement de dosage selon l'une des revendications précédentes, **caractérisé en ce**
**que** le canal d'écoulement (24) suit un tracé et est disposé dans la coque de boîtier inférieure (16), de préférence du côté de la paroi de fond, et possède dans la zone de préhension (5) étroite une première portion de canal d'écoulement (29) à laquelle se rattache une deuxième portion de canal d'écoulement (30) qui s'étend à l'intérieur de la zone de tête (6) élargie, laquelle est formée en plusieurs parties au moins dans la zone de tête (6) élargie, de préférence approximativement à partir de la zone de transition vers la zone de tête (6) élargie, et qui possède une première portion de paroi inférieure (31), ouverte vers le haut vers la coque de boîtier supérieure (15), laquelle peut être fermée, notamment fermée de manière étanche, avec la deuxième portion de paroi supérieure en forme de couvercle amovible de la deuxième portion de canal d'écoulement (30) en vue de former le trajet d'écoulement fermé.

7. Arrangement de dosage selon l'une des revendications précédentes, **caractérisé en ce que** le dispositif de mesure (34), vue dans la direction d'écoulement du liquide, est disposé avant et ainsi en amont de l'élément formant vanne (35) et/ou **en ce que** l'arrivée de liquide (20) est disposée au niveau de la coque de boîtier dans laquelle le canal d'écoulement (24) suit un tracé.

8. Arrangement de dosage selon la revendication 6 ou 7, **caractérisé en ce que** la deuxième portion de canal d'écoulement (30) débouche dans une paroi de fond (25) de la coque de boîtier inférieure (16) et l'orifice de décharge de liquide (26) est ainsi disposé au niveau du côté inférieur du boîtier (2), en référence à la direction de l'axe de hauteur.

9. Arrangement de dosage selon l'une des revendications précédentes, **caractérisé en ce**
**que** le dispositif de mesure (34) est réalisé sous la forme d'un débitmètre à roue à palettes et possède une roue à palettes (33) montée à rotation, disposée dans le canal d'écoulement (24), ainsi qu'un enregistreur de mesure (38) coopérant avec la roue à palettes (33), lequel détecte le mouvement de rotation de la roue à palettes (33) et le communique en tant que signal à une électronique de commande et d'interprétation du dispositif de commande.

10. Arrangement de dosage selon l'une des revendications précédentes, **caractérisé en ce**
**que** la roue à palettes (33) est montée à rotation sur le couvercle technique (32) et est disposée dans le canal d'écoulement (24), de préférence dans la deuxième portion de canal d'écoulement (30), et
**que** l'enregistreur de mesure (38) est formé par un transmetteur d'impulsions disposé dans le boîtier (2), de préférence commandé par champ magnétique, qui convertit le mouvement de rotation en un signal proportionnel au débit et l'achemine à l'électronique de commande et d'interprétation.

11. Arrangement de dosage selon l'une des revendications 6 à 10, **caractérisé en ce**
**que** la première portion de canal d'écoulement (5) qui suit un tracé dans la zone de préhension étroite, vue dans la direction de l'axe de hauteur (29), est de configuration sensiblement plane au niveau de son côté supérieur et/ou forme un support pour un logement de pile/batterie (39) dans lequel est accueillie au moins une pile/batterie (40), laquelle est couple directement ou indirectement au dispositif de commande et/ou à l'unité d'opération (17) et/ou à l'élément formant vanne (35) et/ou au dispositif de mesure (34) en vue de l'alimentation en énergie.

12. Arrangement de dosage selon les revendications 10 et 11, **caractérisé en ce**
**que** le logement de pile/batterie (39) s'étend jusque dans la zone de la roue à palettes (33), repose de préférence au-dessus de la roue à palettes (33) sur le couvercle technique (32) et/ou est monté sur le couvercle technique (32), et que l'enregistrement de mesure (38) est disposé au niveau du logement de pile/batterie (39) et associé à la roue à palettes (33).

13. Arrangement de dosage selon l'une des revendications 6 à 12, **caractérisé en ce**
**que** la zone de la deuxième portion de canal d'écoulement (30) formée par le couvercle technique (32) et la portion de paroi inférieure (31) possède une zone de déviation d'écoulement (41) sensiblement en forme de U, laquelle est configurée de telle sorte que le liquide qui afflux depuis la portion de paroi inférieure (31) dans la zone de déviation (41) s'écoule tout d'abord dans une première portion (41a) de la zone de déviation d'écoulement (41), vers le haut vu dans la direction de l'axe de hauteur ou en direction du couvercle technique (32) vers une zone de trop-plein (42) formée dans le couvercle technique (32), dans lequel a lieu la déviation de l'écoulement avant que le liquide s'écoule de nouveau ensuite, après avoir traversé la zone de trop-plein (42), dans une deuxième portion (41b) de la zone de déviation d'écoulement (41), en référence à la direction de l'axe de hauteur, vers le bas ou à l'écart du couvercle technique (32) vers l'orifice de décharge de liquide (26) disposée et/ou formée dans la paroi de fond (25) de la coque de boîtier inférieure (16), avant qu'il soit de préférence prévu que l'élément formant vanne (35) est maintenu au niveau du couvercle technique (32), de préférence dans un logement de forme tubulaire (43) au niveau du côté supérieur du couvercle technique (32) vu dans la direction de l'axe de hauteur, et/ou incorporé dans le trajet d'écoulement de telle sorte que l'élément formant vanne (35), de préférence une pièce de fermeture de l'élément formant vanne (35), ferme le trajet d'écoulement dans la position fermée, de préférence dans la zone de trop-plein (42), et le libère dans une position ouverte.

14. Arrangement de dosage selon l'une des revendications précédentes, **caractérisé en ce**
**qu'**un étrier de maintien (62) est formé et/ou disposé au niveau du boîtier (2), de préférence voisin à un orifice de décharge de liquide (26) et/ou au niveau du côté inférieur du boîtier (2) en référence à la direction de l'axe de hauteur, notamment pour un maintien et/ou une dépose de l'arrangement de dosage (1) au niveau d'une zone de bord d'ouverture (63) d'une ouverture de contenant ou de récipient (64) d'un contenant (65) ou d'un récipient à remplir.

15. Arrangement de dosage selon la revendication 14, **caractérisé en ce que** l'arrangement de dosage (1), dans l'état maintenu au moyen de l'étrier de maintien (62) au niveau d'une zone de bord d'ouverture (63) d'une ouverture de contenant ou de récipient (64) d'un contenant (65) ou d'un récipient à remplir, reposant sur la zone de bord d'ouverture (63) de telle sorte que l'orifice de décharge de liquide (26) est orienté en direction de l'espace intérieur de contenant ou de récipient (66) et/ou l'unité d'opération (17) est accessible librement pour un actionnement, notamment accessible librement depuis le haut en référence à la direction de l'axe de hauteur.

16. Arrangement de dosage selon la revendication 14 ou 15, **caractérisé en ce**
**que** l'étrier de maintien (62) est configuré et disposé au niveau de l'arrangement de dosage (1) de telle sorte que l'arrangement de dosage (1) qui repose sur la zone de bord d'ouverture (63) peut être basculé vers le bas avec sa zone partielle qui se trouve à l'extérieur du contenant (65) ou du récipient et peut être soutenu au niveau de la paroi extérieure de contenant ou de récipient (69) par une zone de soutien (68) de l'étrier de maintien (62), ce qui peut de préférence être obtenu par le fait que le centre de gravité de l'arrangement de dosage (1) ou l'arrangement de dosage (1) avec les pièces de raccordement, dans son état reposant et maintenu au niveau de la zone de bord d'ouverture (63), se trouve à l'extérieur du contenant (65) ou du récipient, et
**qu'**un palier de butée est formé au niveau du boîtier (2) de l'arrangement de dosage (1) qui, dans l'état maintenu rabattu vers le bas de l'arrangement de dosage (1), repose depuis le côté intérieur du contenant ou du récipient contre la zone de bord d'ouverture (63) et y prend appui, en prévoyant de préférence que l'orifice de décharge de liquide (26) possède un élément de sortie (27) qui fait saillie du boîtier, de préférence un manchon de sortie en forme de tube, qui forme le palier de butée.

17. Utilisation d'un arrangement de dosage (1) selon l'une des revendications précédentes pour délivrer une quantité de liquide prédéterminée, notamment une quantité d'eau prédéterminée.
